Europäisches Patentamt

(19) European Patent Office

Office européen des brevets

(11) **EP 1 213 477 A1**

## (12) EUROPEAN PATENT APPLICATION
published in accordance with Art. 158(3) EPC

(43) Date of publication:
**12.06.2002 Bulletin 2002/24**

(21) Application number: **97927510.4**

(22) Date of filing: **23.05.1997**

(51) Int Cl.⁷: **F03G 3/00**, F03H 5/00,
B60F 5/02, B60K 8/00,
B62K 11/00, B62K 17/00,
B64C 39/00, B64G 1/40

(86) International application number:
**PCT/RU97/00163**

(87) International publication number:
**WO 97/45639 (04.12.1997 Gazette 1997/52)**

(84) Designated Contracting States:
**AT BE CH DE DK ES FI FR GB GR IE IT LI LU MC NL PT SE**

(30) Priority: **24.05.1996 RU 96110479**

(71) Applicant: **Ekhin, Jury Bronislavovich
30455 Hannover (DE)**

(72) Inventor: **Ekhin, Jury Bronislavovich
30455 Hannover (DE)**

(54) **METHOD FOR CONVERTING THE ROTATION OF A SOLID BODY INTO LINEAR TRACTION FORCE ACCORDING TO A DIRECTIONAL UNBALANCE PROCESS, AND DEVICES FOR REALISING THE SAME**

(57)     The present invention uses the well-known effect of disbalance of a rotating solid body that is wobbling and thus generation vibrations. But this effect converted into such form that the wobbling are always developed in one direction towards the axis and that its pulses are levelled, as result a constant linear propulsion force of high smoothness and efficiency is obtained. This occurs in the following manner: moving masses (2) are placed on the body (1) and while the body (1) is rotating they are forced in turn to move away from the body axis (Ao) and approach back of one complete rotation of the body. The masses move away from the axis occurs under the rotation of the body, while the approach of the masses towards the axis is occurring under the influence of radial centripetal forces. Under this reason there is no occurrence of the mutual neutralisation of forces which are responsible for retreat and approach motions of the masses. Simultaneous action of all centrifugal forces creates in geometrical sum the resultant force which is applied to the body axis. This invention is based on the law of conservation of impulse, Newton's laws, law of conservation and transformation of energy, law of change of body masses centre motion, law of change of angular impulse. In this invention is presented the series of mechanical facilities, which may be used for building new transport systems having properties never reached before, lake those of "flying cars", while using traditional engines, and others.

FIG. 19

## EP 1 213 477 A1

**Description**

FIELD OF TECHNOLOGY.

The INVENTION is refered to the technical solution in the field of converting of the solid body's rotation into the linear, regulated and directed propulsion force.

FORMER LEVEL OF TECHNOLOGY.

This INVENTION continues the International application for the patent No PST/RU94/00242.The international publication number WO 96/12891.The date of the international publication 02.05.96.The priority date 25 10.94 The applicant and inventor: EKHIN, Jury Bronislavovitch [RU/RU]; Russia, 440600, Penza, Uritskogo St., 16-50

[ЭХИН Юрий Брониславович, Россия, 440600, г. Пенза, ул. Урицкого 16-50 ] .

Regarding to the level of Technology, it is the common knowledge that to make body draft in a linear motion, an external support is needed As the support, the other bodies or the Earth are used for. For this effect the usage is made of the surrounding environment i.e., atmosphere or water, with the assistance of, for example, the propeller, rotating-blade wing , etc. The so called, "supporting masses", as the energy of a fluid working medium, for example, a hot gas in the jet and missile engines, are used, as well.
In the other cases, the linear motion of a body is originated as by the gravitation force, as, for example, by the difference in the body's density and the surrounding environment, existing, for example, in balloons or submerged apparatus/as due to the body's friction on the moving medium, for example, water's current on the drafting body, or the air on a sailboat.
The refered modes, as well as the propellers on their basis, do not permit the Mobil apparatus move under control in several mediums.
An exception is the missile propeller which, however, may be of a limited use for consuming of a lot of expensive fuel, having engine force not controlled and the open fire, smoke and high noise level when operated.
The aim of the previous invention was to create the linear propulsion force different in principle from the known modes of creation, as well as the propellers on this basis, that not interact with the surrounding medium, for mobile and transport apparatus, permitting, thus, their motion inside any moving or rarefied medium. The linear propulsion force is there created by absolutely new mode, i.e., by the converting of the rotation of a solid body into the linear propulsion force through the method of directed disbalance which parameters are controlled.
To achieve the presented aim, the phenomena known in the mechanical engineering as disbalance of a rotated piece, is used which beatings normally provoke the destruction of the support bearings in the vehicles and mechanisms.
However, this phenomena is converted in a such way that the beatings are always developed in one direction towards the axis.
For this effect is used the well-known and unique property of the weights located on the rotated body, to move from the axis of rotation under the influence of forces of proper inertia.
When to the balanced body, with the masses located and produced with the possibility to move along the beam-like guides, the rotation is applied, for example, by the engine, these masses move from the axis under the influence of their proper inertia, however, in the determined sector of rotation they are brought back with the assistance of the external applied force, for example, under the action of the voltage, additionally supplied to the electromagnets. By this the moving masses, rotated with the body, move in turn along the orbit, which center is constantly displaced into the constant direction relatively the axis of rotation.
Because of weights' moving from the axis in industry-applied rotations happens, in reality, more slowly than their free moving away in the same rotations would take place, this does not lead to the reverse reaction of the body, oppositely directed.
At different distances from the body's axis of rotation the equal weights influence with different centrifugal forces on the parts that obstacle their moving. The produced by this difference in centrifugal forces which are used by masses for simultaneous influence on the body in different points of their orbits/applies to the body the linear propulsion force that moves the body's axis.
Thus, the well-known in mechanics the disbalance of the rotated body that usually provokes the harmful dynamic loadings, is converted into useful propulsion force.

DETAILS OF INVENTION.

The aim of the present invention is to develop the previous one.

The essential what is used is the more developed usage of the rotation of a body. As for the previous invention, there the rotation of a body is used only to make distant from the body's axis the moving masses. Their approaching to the axis is done by the applied external force. For this effect, for example, the supplementary electric energy or other types of the applied forces or energy are needed. In the present invention the energy of the rotation of a body is used as veil to make approaching the distant moving weights towards the body's axis, due to its conversion into such a force. By other words, to achieve the mentioned result, i.e. to create the linear propulsion force, now is sufficient only to apply the rotation to the body, for example, by the engine, without need of supplementary appliance of forces. It makes more simple all the process and broadens its industrial usage

The second difference is that the weights are approached to the axis by applying of the converted force to the proper body specifically at the points of a body equal for each weight. The force of reaction of a support - body that appears by this according to the 2-d Newton's law, is directed at the same or nearly the same side as the summed vector of the centrifugal forces of weights, arising by this the effectiveness of the methods and facilities And the proper body looks like it is approached to such weights that move away while the body rotates

The appliance of forces at the equal for each weight points permits to sum the centrifugal forces and the forces of reaction of a support in more organized, effective and directed mode.

The third difference is that the number of methods of creation of directed disbalance is arisen, for exempla, as there is a motion of moving weights along the orbits of different size which centers are displaced in one direction. By this, by two times is reduced the number of impulses of force during one rotation of a body and is widened the angle of sector of action of the centrifugal forces.

The directed disbalance is created also by the masses of different value when the difference of masses' value is compensated by the reverse difference of sizes of the orbits of their motion.

In the present invention is presented the broad spectrum of mechanical facilities for using of the method of converting of the rotation into the propulsion force with the weights approaching towards the axis of force, converted from the force of rotation of a body.

The invention, as well, describes the sophisticated vehicles where the facilities are mounted. The space is given to the new means of transportation in masses with previously unknown properties like "flying vehicle" and "flying motorcycle" with normal engines, capable of moving under control in the air due to the mounted inside facilities, as well as to the aerial and outerspace apparatus like "flying disc" and "flying coil" on the basis of facilities.

Several masses.

The mode to convert the rotation of a solid body into the linear propulsion force, when upon the balanced body which axis is protected from rotation or produced with the possibility to rotate, are uniformly located one by one or in equal groups around the axis of rotation the equal masses, produced with the possibility of moving of each mass or its center of gravity away from the axis of rotation of a body and approaching to this axis by the equal trajectories, and with the rotation of a body the masses or its centers of gravity move away from the axis of rotation of a body under the influence of the force of inertia or the force of inertia in combination with the force, converted from the force of rotation of a body at the beginning of the trajectory of moving away, and then they are approached towards the axis by the action of the force, converted from the force of rotation of a body that makes support of a body or axis at the equal for each mass point or group of points, in cyclicity of one complete rotation of a body around the axis, having the masses rotated with the body or its centers of gravity in term moving along closed convex orbit around the axis of rotation of a body, or which passes through the axis and which center is always displaced in constant direction relatively the axis of rotation of a body, resulting the sum of vectors of the centrifugal forces, used by masses to simultaneously influence on a body, and the vectors of forces of reaction of a support on the approaching of masses, to create the directed disbalance that applies to the body the linear propulsion force transverse to the axis of its rotation, having the value and the shape of the orbit , as well as the value and direction of displacement of the center of the orbit as changeable during body's rotation or in the rest state, and resulting the changing of the value and direction of action of the linear propulsion force.

Eccentric axis-crank.

According to the mode of action, it is the mechanical facility where on conventionally imovel basis is located the axis-support, produced with the possibility to rotate relatively this basis, having fixed upon the axis-support with the possibility to rotate relatively this one the balanced wheel-like or cone-like element on which equal radiant guides, located uniformly round the axis-support, are situated the equal weights, one on each guide, produced with the possibility to move along these guides, and also the eccentric and imovel axis-crank, mounted on the axis-support in parallel to this one, which eccentricity is regulated and on which is fixed the eccentric mechanism of group drive with the number of drive racks according to the number of weights on the element, each rack firmly fixed with the gear-wheel, situated upon the element in balance around the axis-support, at the beginning of each, radiant guide, and this wheel in alignment is connected to the sprocket, through which passes the closed driving chain, thrown over and tightened as well through the second sprocket, situated in balance on the element, at the end of each radiant guide, and to each chain equally is fixed the corresponding weight, or each gearwheel enters or is connected with the other equal and equally regulated driving kinematic pair or chain that moves the corresponding weight along the radiant guide, and while the element rotates around the axis-support, the racks of group drive in tern and in reverse make rotate the gear-wheel that initiates the motion of the kinematic driving pairs or chains, approaching the weights to the axis of rotation and then moving them away at the beginning of the motion and/or permitting them to move away from the axis of rotation under the influence of forces of the proper inertia, resulting that, during each rotation of the element around the axis-support, the weights being rotated together with the element, move in tern around the axis of rotation along the closed convex orbit which center is constantly displaced in the constant direction relatively the axis of rotation of the element, creating the directed disbalance, and, by this, with the changing of the value of the eccentricity of the axis-crank the value of displacement of the center of the orbits of weights is changed, and with the rotation of the axis-support relatively the basis, is changed the direction of displacement of the orbits' center and the direction of disbalance.

Cam mechanism. Several weights.

The mechanical facility where on conventionally imovel base is located the axis-support, produced with the possibility to rotate relatively this base, and on the axis-support with the possibility to rotate relatively this one is situated the balanced wheel-like or cone-like element on which equal radiant guides, located uniformly around the axis-support, are situated the equal weights, one on each guide, produced with the possibility to move along these guide, while on the axis-support is located the known cam mechanism with the imovel convex cam that has equal pushers or levers according to the number of the weight, each one being equally and firmly fixed or connected with the corresponding equal gear-wheel which are located on the element equally and in balance, at the beginning of each radiant guide, and this gear-wheel in alignment is connected in pair with the sprocket, over which is thrown the closed driving chain, thrown and tightened through the second sprocket, situated in balance on the element, at the end of each radiant guide, and to each chain equally is chained the corresponding weight, or each gear-wheel enters or is connected with the other equal and equally regulated driving kinematic pair or chain that moves the corresponding weight along the radiant guide, and while the element rotates around the axis-support, the pushers and levers in tern move on the cam, making the reciprocating and balancing motions, rotating in reverse the gear-wheels that put into action the driving kinematic pairs or chains, approaching the weights to the axis of rotation/and then taking them away at the beginning of the action and/or permitting them to move away from the axis of rotation under the influence of forces of the proper inertia, and, by this, during each rotation of the element around the axis-support the weights that are rotated together with the element move in tern along the closed convex orbits which center is constantly displaced in the constant direction relatively the axis of rotation of the element, the directed disbalance, and with the rotation of the axis-support relatively the base is changed the direction of displacement of the weights' orbits and the one of the directed disbalance.

WP. Racks-gears.

The mechanical facility where on conventionally imovel base is located the drive shaft, capable to rotate, upon which in alignment and firmly is fixed the balanced wheel-like or cone-like element on which equal radiant guides, located uniformly around the shaft fare situated the equal weights, one on each guide, produced with the possibility to move along these guides, while on the shaft, between the base and the element is located the known wobble plate with slide rack, which upper ring are fixed to equally and uniformly through the ball joints the equal racks, according to the number of the weights on the element, produced with the possibility to move along the shaft, each one being chained uniformly and firmly with the gear-wheel, mounted upon the element in balance around the shaft, at the beginning of each radiant guide, and the gear-wheels are firmly and uniformly chained with the other racks, equal to each other, and each being fixed to the corresponding weight, and by this, the chaining of each pair of such racks with the gear-wheel is done preferably in a such way that two racks are simultaneously chained with the gear-wheel by their middle parts, and gear ratios inside such rack gears are equal or different, or these dear-wheels enter or are connected with the other equal driving kinematic pairs or chains which make to move the weights along the guides, and while the shaft of the element rotates, the first racks in term move on the wobble plate, rotating in reverse the wheels, which in reciprocating motion push the second racks, or push the other driving kinematic pairs or chains, approaching the weights to the axis of rotation of the element, and then moving them away from the axis of rotation at the beginning of moving away and, or permitting them to move away from the axis of rotation under the influence of forces of the proper inertia, and by this, during the complete rotation of the element the weights, rotated together with the element ,move in tern along the equal closed convex orbit, which center is constantly displaced in the constant direction relatively the axis of rotation, and thus the directed disbalance is created, attaching to the element the linear propulsion force, having while the slide rack of the wobble plate move along the shaft the value of the orbit of weights as changed, and with changing of the angle and direction of slope of the wobble plate, ace changed the value and direction of displacement of the center of orbits of the weights.

The wobble plate. Cams, screw shaft.

The mechanical facility where on conventionally imovel base is located the drive shaft, capable to rotate, upon which in alignment and firmly is fixed the balanced wheel-like or cone-like element on which equal radiant guides, located uniformly around the shaft, are situated the equal weights, one on each guide, produced with the possibility to move along these guides, and on the shaft, between the base and the element is located the known wobble plate with slide rack for produced with the possibility to move along the shaft, which upper ring are joining to the equal ball cams in perimeter and moving position, or are joined the equal ball hinges, by their other edges connected to the levers with the possibility to swing the levers, and each of these levers is firmly fixed to one of the equal screw shafts, which are located upon the element uniformly along each radiant guide, and are produced with the possibility to rotate, and each weight is uniformly chained to the corresponding screw shaft, or these levers ace connected with the other equal driving kinematic pairs or chains that approach the weights to the axis along the guides, and while the shaft of the element rotates, the cams or hinges cove in tern on the wobble plate, swing the levers and rotate in reverse the screw shafts, or put into action the other driving kinematic pairs or chains, approaching the weights to the axis of rotation of the element, and then permitting the weights to move away from the axis of rotation under the influence of forces of inertia, or taking them away at the beginning of the trajectory of moving away, having, thus, that during complete rotation of the element the weights, rotated together with the element, move in tern along the equal closed convex orbit, which center is constantly displaced in the constant direction relatively the axis of rotation, and due to the mentioned above, the directed disbalance is created, attaching to the element the linear propulsion force ,having while the slide rack or the wobble plate move along the shaft the value of the orbit of weights as changed, the angle of slope of the wobble plate changes changing the value of displacement of the center of orbits, and with changing of the direction of slope of the wobble plate, is changed the direction of displacement of the center of orbits of the weights.

The wobble plate. Two weights on the screw shaft.

The mechanical facility where on conventionally imovel base is located the drive shaft, capable to rotate, upon which in alignment and firmly is fixed the balanced wheel-like or cone-like element and on which opposite radiant guides are located per one equal weight, produced with the possibility to move along the guide, and also upon the element in parallel to the radiant guides is situated the balanced diametric screw shaft ,mounted upon the element with the possibility to rotate around its axis, in the middle of which in alignment and firmly is fixed the sprocket or the gear-wheel. and each weight is equally chained to this screw shaft, and also upon the driving shaft between the base and the element is located the known mechanism of the wobble plate, which upper ring in perimeter is connected to the opposite edges the moving driving chain which is thrown over and tightened through the sprocket on the screw shaft, or to the upper ring of the wobble plate comes near the movel semi-gear wheel, fixed on the drive shaft longitudinally to it, with the possibility of having the limited angle of rotation, connected to the gear-wheel on the screw shaft, and the chaining of the weights with the screw shaft and(or) the chain with the sprocket or the semigear with the gear-wheel, preferably, is done in a such way that in position when the wobble plate is perpendicular to the drive shaft and both the ends of the chain or both edges of the semigear are distant equally from the element, the weights are kept in the middle of the guides at the equal distance from the axis of rotation of the element, or when there is the biggest slope of the wobble plate, and when the difference of distance of the ends of chain or the same of the edges of semigear from the element is the biggest one, the weights are kept in the middle of the guides, at equal distance from the axis of rotation of the element , and while the drive shaft rotates, the driving chain or the semigear-wheel that is in cycle moved by the wobble plate, rotates in reverse the screw shaft that in reciprocating motion makes to move the weights along the guides in a such way that during complete rotation of the element the weights, rotated together with the element, move along closed orbits. which centers are constantly displaced in constant direction relatively the axis of rotation of the element, thus, creating the directed disbalance, that attaches to the element the linear propulsion force, and more, having in case of the second preferable chaining of the weights with the screw shaft, and, or chain with sprocket, or semigear with the gear-wheel, the weights rotating along the different orbits, and with changing of the direction and angle of slope of the wobble plate, are changed the direction and the value of displacement of orbits of the weights and of their centers.

The wobble plate with hydraulic drive.

The facility where on conventionally imovel base is located the drive shaft, capable to rotate, upon which in alignment and firmly is fixed the balanced wheel-like or cone-like element, and on the element are situated in perimeter not less than two equal and diametrically opposite weights, produced with the possibility to move along the equal radiant guides, fixed upon the element, and each of these weights is connected to the piston of hydraulic transmission, mounted upon the element near the external edge uniformly to each weight, and the second pistons of these equal hydraulic transmissions are located upon the element near the axis of rotation, along the shaft and are joined to the upper ring of the wobble plate, situated on the shaft of the element, between the element and the base, and while the element rotates around the axis the second pistons of the hydraulic transmissions move along the wobble plate, relay the force to the pistons of the weights that in tern approach the weights to the axis of rotation, and on the reverse motion of pistons the weights are moved away from the axis under the influence of the proper inertia, by this creating the directed disbalance, with the masses of the weights more higher than the masses of liquid in the hydraulic transmissions, having the pistons of weights preferably equal or smaller diameter.

In these mode and facilities the propulsion force across the axis of rotation is created by the difference between the centrifugal forces and forces of reaction of support of several masses upon the body and weights upon the element.

One mass.

The mode to convert the rotation of a solid body into the linear propulsion force, directed across the axis of rotation, when on the balanced body, which axis is protected from rotation, or is produced with the possibility to rotate, the mass is located, which is produced, or which center of gravity is produced with the possibility to move away from the axis of the body and to approach to the axis along the constant trajectory, and when the body rotates, the mass or its center of gravity moves away from the axis under the force of inertia, or the force of inertia in combination with the force, converted from the force of rotation of the body or any other applied force at the beginning of the trajectory of moving away, and then the mass or its center of gravity is approached to the axis under the influence of the force, converted from the force of rotation of the body or any other applied force that rests upon the body, or upon the axis, in cycle during the complete rotation of the body, or the mass, or its center of gravity are taken away, brought back into the former position ,again are moved away through the axis by the opposite side, and again are returned in cycle during the complete rotation of the body, achieving its biggest displacement in the constant direction relatively the axis of rotation of the body, resulting that the mass, rotated together with the body, or its center of gravity moves along the closed convex orbit, planed or not, that passes through the axis of the body, or around the axis of the body, which center is constantly displaced in the constant direction relatively the axis of rotation of the body, having as the result that the sum of centrifugal forces at the different points of the trajectory and of forces of reaction of support regarding the mass approaching creates the directed disbalance, that attaches to the body the linear propulsion force across the axis of rotation, having the value and the shape of the orbit of center of gravity of the mass, as well as the value and the direction of displacement of the center of the orbit as changeable when the body rotates or rests, and due to the mentioned above, the value and the direction of action of the linear propulsion force are changed.

One mass and counterweight.

The mode to convert the rotation of a solid body when the trajectory of moving of the movel mass on the body does not intercross the axis of rotation of the body, and upon the body is located in addition the imovel counterweight, situated oppositely to the mass in a such way and of a such weight that it balances the mass at the point of its trajectory, preferably in the middle of the trajectory, produced with the possibility to change the eccentricity, and due to the counterweight, when the body rotates, the sector of action of the directed disbalance is narrowed, and when the eccentricity of the counterweight changes as well changes the direction of such sector.

The wobble plate. Chain with one weight.

The mechanical facility with the wobble plate where on conventionally imovel base is located the drive shaft, capable to rotate, upon which in alignment and firmly is fixed the balanced wheel-like element, where on the diametrical guide is mounted the weight, produced with the possibility to move along this guide, and, more or less, the middle part of the weight is done as a rack, and the weight is chained with the gear-wheel-sprocket or the gearwheel, which is located upon the shaft with the possibility to rotate, as well as balanced, and on the shaft between the base and the element is situated the known mechanism of the wobble plate, which upper ring in perimeter is fixed to in moving position to the opposite edges, for example, by the ball hinges, the driving chain, which is thrown over and tightened through the sprocket, or joins movingly the semigear-wheel, fixed on the shaft in parallel to it and in balance with the possibility of having the limited angle of rotation, linked with the gear-wheel, having the chaining of the wheel with the rack on the weight preferably done in such a way that in position when the wobble plate is perpendicular to the shaft, the center of gravity of the weight coincides with the axis of rotation of the element, or when there is the biggest slope of the wobble plate, the center of gravity of the weight coincides with the axis of rotation of the element, and when the shaft of the element rotates, the driving chain or the semiwheel, moved in cycle by the wobble plate, rotate in reverse the gear-wheel-sprocket or the gear-wheel, which attaches to the wheel the reciprocating motion, and by this, during the complete rotation of the element, the weight, rotated together with the element, and its center of gravity moves along the closed convex orbit, that passes through the axis of the element or around it, which center is constantly displaced in constant direction relatively the axis of the element, and due to the mentioned, is created the directed disbalance, attaching to the element the linear propulsion force, and with changing of the angle and direction of slope of the wobble plate relatively the shaft, are changed the value and direction of displacement of orbit of the weight.

In these mode and facilities the directed disbalance is created by the one movel mass due to different readings of the centrifugal force as well as to ones of the forces of reaction of support in different points of its orbit.

Changeable masses.

The mode where the value of each mass is equally changeable, and when the body rotates, these masses are in tern increased until the maximum values in constant sector of orbit relatively the axis of rotation of the body, and then, are reduced until the minimum values in the diametrically opposite sector of the orbit, and again increase until the maximum values on the first sector of the orbit in cycle, during the complete rotation of the body around the axis due to flowing of the substance from one mass into another or flowing of the substance from each mass into the general collector, balanced relatively the axis, and back, under the influence of the attached force, aiming to reduce each mass and converted from the force of rotation of the body, or any other external force that rests over the body or the axis in the equal for each mass values of points in the previous sector of the orbit, in cycle, during the complete rotation of the body around the axis.

The wobble plate with shears-like drive.

The facility where on conventionally imovel base is located the drive shaft, capable to rotate, upon which in alignment and firmly is fixed the balanced wheel-like or cone-like element, and upon the element are situated in perimeter not less than two diametrically opposite, equal, hermetic and closed capacities, produced with the possibility to change considerably their volume, for example, with the assistance of the moving wall or walls, hermetically connected to each other by the channel, or connected by channels through the general collector, situated upon the element in balance, and filled without hollows by low compressed liquid of considerable density, and the moving walls of each capacity are connected to equal lever or levers of equal shears-like, mechanical, or hydraulical transmission, having the axis of each one uniformly fixed upon the element, while the first links of this mechanical or hydraulical transmissions are fixed equally, for example, by ball hinges on the upper ring of the wobble plate, located on the shaft of the element, between the element and the base, in a such way that, when the wheel-like element rotates, the first links of mechanical and hydraulical transmissions move in tern on the wobble plate, push the levers of the shears-like transmissions, relaying the pressure to the walls of capacities, compressing and splitting them apart, or permitting them to split apart under the influence of special springs or under the pressure of liquid, including the centrifugal pressure, in a such way that when the one capacity is compressed, the other is splitted apart, and vice-versa, and due to this liquid flows from the compressed capacity into the splitted one, and the most filled capacity is always situated in the constant sector relatively the axis of rotation of the element, thus, creating the directed disbalance.

One changeable mass.

The mode where the value of the mass is changeable, for example, by flowing of substance of mass into the collector, balanced relatively the axis of the body, and back, and when the body rotates, the mass is reduced until the minimum value in the constant sector of the orbit relatively the axis of rotation, under the influence of force, converted from the force of rotation of the body, that rests over the body, and then is arisen until the maximum value due to flowing of the substance under the influence of force of inertia in the diametrically opposite sector of the orbit, and again is reduced until the minimum value in the first previous sector of the orbit under the action of force converted from the force of rotation of the body,-in cycle, during the complete rotation of the body around the axis.

In these modes the directed disbalance is created by the difference between the centrifugal forces and forces of reaction of support of liquid or granular masses. The usage of masses, composed of several parts, is also possible.

Masses of different orbits. The mode where the equal masses move along different orbits in a such way that on the body is located the equal number of identical moving masses of two systems, situated so that the mass of one system is located diametrically opposite to the mass of the other system, and when the body rotates, the masses of different systems, rotated together with the body, or their centers of gravity, are approached to the axis with the assistance of the force, converted from the force of rotation of the body, or the attached force, that rests over the body at the points identical for the masses of one system, and are taken away from the axis of rotation under the action of the force of inertia or forces of inertia, in combination with the force, converted from the force of rotation of the body at the beginning of the trajectory of moving away, and by this, during the complete rotation of the body they move along the orbits identical for the masses of each system, different between systems, which centers are constantly displaced in one constant direction relatively the axis of rotation of the body, but at different distances from it, in a such way that the distance from the axis of rotation of the element to the masses, or to the centers of gravity of masses of one system, with the smaller orbit, with their maximum distance from this axis, is equal to the distance from this axis of rotation to the masses or to the centers of gravity of masses of the other system , with the bigger orbits, with their minimum distance from the axis of rotation of the element.

The wobble plate. Two weights on the screw shaft.

The mechanical facility with the wobble plate where on conventionally imovel base is located the drive shaft, capable to rotate, upon which in alignment and firmly is fixed the balanced wheel-like element, with mounted per one identical weight at the opposite radiant guides, produced with the possibility to move along the guide, as well as upon the element, in parallel to the radiant guides, is situated the balanced diametrical screw shaft, fixed upon the element with the possibility to rotate around its axis, in the middle of which, in alignment and firmly is mounted the sprocket or the gear-wheel, and each weight is chained to this screw shaft, and also on the drive shaft, between the base and the element, is located the known mechanism of the wobble plate, to which upper ring/to the opposite edges is fixed in moving position the driving chain, that is thrown over and tightened through the sprocket on the screw shaft, or to the upper ring of the wobble plate joins in moving position the semigear-wheel, fixed on the drive shaft longitudinally, with the possibility of having the limited angle of rotation, chained with the gear-wheel on the screw shaft, and more, the chaining of the weights with the screw shaft and, or the chain with the sprocket, or the semigear-wheel with the gear-wheel, is preferably done in a such way that in position when the wobble plate is perpendicular to the drive shaft, the weights are kept in the middle of the guides, at the equal distance from the axis of rotation of the element, or with the biggest slope of the wobble plate ,the weights stay in the middle of guides, at the equal distance from the axis of rotation of the element, and when the drive shaft of the element rotates, the driving chain or semigear-wheel, being moved in cycle by the wobble plate, rotates in reverse the screw shaft, which by its reciprocating motion transports the weights along the guides, and by this, during the complete rotation of the element, the weights, rotated together with the element, move along the closed orbits, which centers are constantly displaced in constant direction relatively the axis of rotation of the element, creating the directed disbalance that attaches to the element the linear propulsion force, and more, in case of the second preferable chaining of the weights with the screw shaft and(or) the chain with the sprocket/or the semiwheel with the gear-wheel, the weights are rotated along different orbits, and when the direction and the angle of slope of the wobble plate are changed, are changed the direction and the value of displacement of orbits of the weights.
In these mode and facilities the directed disbalance is created by the difference between the centrifugal forces and forces of reaction of support of the identical moving masses, that use different orbits, which centers are displaced in one direction.

Different masses.

The mode with masses different in value where upon the balanced body is located even-number of masses of two systems, equal in each system, but different between systems, located on the body in a such way that the mass of one system is situated diametrically opposite to the mass of the other system, and when the body rotates, the masses, rotated together with the body, or their centers of gravity, are approached to the axis of rotation of the body by the force, converted from the force of rotation of the body, that rests on the body or on the axis in the equal system of points, and are moved away from the axis of masses under the influence of forces of the proper inertia, and by this, masses of different systems or their centers of gravity move along the orbits, equal in each system but different between systems, which centers in both systems are constantly displaced in one direction, constant relatively the axis of rotation of the body, and thus, the orbit of each bigger mass is smaller then the orbit of each smaller mass of the other system, and the difference between values of the centrifugal forces of masses of different systems and forces of reaction of support, when masses pass the equal sector of orbits, is equalized due to the difference between values of their orbits and (or) the difference in displacement of centers of their orbits relatively the axis of rotation of the body.
In this mode the directed disbalance is created by the difference between the centrifugal forces and forces of reaction of support of different in value masses, which difference of centrifugal forces in the same sectors of rotation is equalized by the difference of values of orbits.

Two systems of separated masses.

The mode with two systems of masses which orbits of motion in each system are separated along the axis of rotation of the body in a such way that upon the body are located not less than two systems of masses, which trajectories and orbits of motion or the ones of centers of gravity are situated at some distance from the masses of the other system along the axis of rotation of the body, and the centers of orbits are constantly displaced in the constant direction relatively this axis, having the value of orbits as well as the value and direction of displacements of the center of orbits of the masses, not less than in one system of masses, as changeable ,when the body rotates or (and) rests, and owing to the mentioned, in the different parts of the body is created the linear propulsion force, which summed direction is changeable in space, and the body is capable to move along the complicated space trajectory.

Two separated masses.

The mode where the orbits of motion of each of two masses are separated along the axis of rotation in a such way that upon the body are located two identical masses which trajectories and orbits of motion, or the ones of their centers of gravity are situated at some distance one from another along the axis of rotation of the body, and the centers of orbits are constantly displaced in constant for each mass direction relatively this axis, having the value of the orbit as well as the value and the direction of displacement of the center of orbit more or less of one mass as changeable when the body rotates and (or) rests, and due to mentioned in the difference parts of the body is created the linear propulsion force, which summed direction is changeable in space, and the body is capable to move along the complicated space trajectory. The wobble plate. Racks, gears. Separated weights.

The mechanical facility with two separated elements and wobble plates where on conventionally imovel base is located the drive shaft, capable to rotate, on which opposite ends, bulged out of the base, in alignment to the shaft and firmly are fixed two balanced wheel-like or cone-like elements where on equal radiant guides of each of them, uniformly situated around the shaft, are located, identical more or less for the element, the weights, one on each guide, produced with the possibility to move along these guides, and upon the shaft, at some distance from each element along the axis, between the base and each of the elements, are mounted two independent mechanisms of the wobble plates with slide racks, one for each element, and to the upper rings of the wobble plates are equally fixed by ball hinges the equal for the element racks, according the number of the weights on each of the element, and each rack uniformly and firmly is chained with the gear-wheel, situated on the corresponding element equally and balanced around the shaft , at the beginning of each radiant guide, and these gear-wheels of each element are also firmly and equally chained with the racks, identical to each other on the element, and each of them is fixed to the corresponding weight, and more, the chaining of each pair of such racks with the gear-wheel is produced preferably in a such way that both racks are simultaneously chained with the wheel by their middle parts, and the gear ratios inside of such racked transmissions are identical or different, or these gear-wheels enter or are connected with the other identical driving kinematic pairs or chains, which make moving the weights along the guides, and when the shaft rotates, the first racks of each element move in tern through the corresponding wobble plate, rotate in reverse the wheels, that move in reciprocating motion the second racks, or put into action the other driving kinematic pairs or chains, approaching the weights to the axis of rotation of the element, and then moving them away from the axis of rotation at the beginning of moving away and, or permitting them to move away from the axis of rotation under the influence of forces of the proper inertia, and by this, during the complete rotation of the elements, the weights, rotated together with the elements, move in tern along the identical for each element closed convex orbit, which center is constantly displaced in constant direction relatively the axis of rotation, thus creating the double directed disbalance from different ends of the shaft, and to mention, when the sliding racks of the wobble plates move along the shaft, as well as when the angles and directions of slope of the wobble plates are changed, the summed linear propulsion force is created on the shaft, which direction is changeable in space.

The wobble plate. Cams, screw shaft. Separated weights.

The mechanical facility where upon the drive shaft, bulged out of the base, on the opposite ends are firmly fixed the balanced wheel-like or cone-like elements with movel weights on the radiant guides, and upon the shaft, between each element and the base, are located per piece the wobble plates with slide racks, to each of which are connected the kinematic chains, that approach the weights towards the axis on the corresponding element, and when the shaft rotates, the weights, rotated together with the elements, move in tern along the equal for each element closed convex orbit, which center is constantly displaced in constant direction relatively the axis of rotation, and due to the mentioned, is created the double directed disbalance from different ends of the shaft, and more, when the slide racks of the wobble plates move along the shaft, as well as when the angles and directions of slope of the wobble plates on the shaft are changed, the summed linear propulsion force is created, which direction is changeable in space.

The wobble plate. Chain with one weight. Separated weights.

The mechanical facility with two separated elements and wobble plates where on conventionally imovel base is located the drive shaft, capable to rotate, on which opposite ends, bulged out of the base, in alignment to the shaft and firmly are fixed two balanced wheel-like elements, having on the diametrical guides each of them located the weights, produced each one with the possibility to move along this guide, and, not less then the middle part of each weight is done likewise the rack, and each weight is chained with the gearwheel-sprocket or gear-wheel, that is situated on each element upon the shaft, in parallel to the shaft, in balance, and upon the shaft, between the base and the elements, are located two independent mechanisms of the wobble plate, per piece for each element/to which upper rings in perimeter, to the opposite edges equally are fixed in moving position the driving chains, which are thrown over and tightened through the sprockets, or are joined movingly semigear-wheels, fixed on the shaft in balance with the possibility of having the limited angle of rotation, chained with gear-wheels, and more, the chaining of the wheels with racks on the weights is preferably done in a such way that in position when the wobble plates are perpendicular to the shaft, the centers of gravity of the weights coincide with the axis of rotation of the elements, or with the biggest slope of the wobble plate, the centers of gravity of the weights coincide with the axis of rotation of the elements, and when the shaft of the elements rotate, the driving chains or semiwheels, pushed in cycle by the wobble plates, rotate in reverse the gear-wheels-sprockets or the gear-wheels, which apply to the weights the reciprocating motion in a such way that during the complete rotation of the elements, the weights, rotated together with the elements, and their centers of gravity, move on each element along closed convex orbits, that pass through the axis of the elements or around it, which centers are constantly displaced in constant direction relatively the axis of the elements, and due to the mentioned, is created the double directed disbalance from different ends of the shaft, and more, when the angles and directions of slope of the wobble plates are changed, there is the summed linear propulsion force that is created on the shaft; which direction is changeable in space.

The wobble plate. Two weights on screw shaft. Separated weights.

The mechanical facility with two separated elements and the wobble plates where on conventionally imovel base is located the drive shaft, capable to rotate, on which opposite ends, bulged out of the base, in alignment to the shaft and firmly are fixed two balanced wheel-like elements, having on two opposite radiant guides of each of them located the weight identical for, each of the elements, produced with the possibility to move along this guide, and also on each element in parallel to the radiant guides is situated the balanced diametrical screw shaft, fixed upon the element with the possibility to rotate round its axis, in the middle of which in alignment and firmly is located the sprocket or the gear-wheel, and each weight on the element is chained to the screw shaft, and upon the drive shaft, between the base and each element, are situated two independent mechanisms of the wobble plate, per one for each element, to the upper ring of each of them, to the opposite edges, is fixed in moving position the driving chain, thrown over and tightened through the sprocket on the screw shaft, or to the upper ring of the wobble plate joins movingly the gear-semiwheel, fixed on the drive shaft longitudinally with the possibility of having the limited angle of rotation, chained with the gear-wheel on the screw shaft, and more, the chaining of the weights with the screw shaft and (or) the chain with the sprocket, or the semiwheel with the gear-wheel is done preferably in a such way that in position when the wobble plate is perpendicular to the drive shaft, the weights are kept in the middle of the guides, at the equal distance from the axis of rotation of the element, and with the biggest slope of the wobble plate, the weights stay in the middle of the guides, at equal distance from the axis of rotation of the element, and when the drive shaft rotates, the driving chains, or the gear-semiwheels, moved in cycle by the wobble plates, rotate in reverse the screw shafts of the elements, which by the reciprocating motion make the weights to move along the guides in a such way that during the complete rotation of the elements, the weights, rotated together with the elements, move on each element along the closed orbits, which centers are constantly displaced in constant direction relatively the axis of rotation of the elements, creating the double directed disbalance from the different ends of the shaft, attaching to it the linear propulsion force, and more, in case of the second preferable chaining of the weights with the screw shaft or (and) the chain with the sprocket, or semiwheel with the gear-wheel, the weights of each element rotate along the different orbits, and when the directions and angles of slope of the wobble plates are changed, is changed the direction and the value of displacement of orbits of the weights, and is changed in space the direction of the propulsion force.

In these mode and facilities the difference between the centrifugal forces and the forces of reaction of support creates the double disbalance from the different ends of the body or of the shaft of the elements/thus permitting to change the direction of the propulsion force in space.

Connections between pair of masses.

The mode with the supplementary connections between the masses where upon the body is located the even number of moving masses at least of one system and each two opposite masses of system are connected one to another in pair by equal connections, and moreover, the forces to approach masses towards the axis of rotation are applied to these connections or to the masses, and when the body rotates/the value of force, needed to approach each mass to the axis of the body/is reduced due to the partial compensation of this force, or partial compensation that turns to be the complete one at the part of the trajectory, by the force of inertia of the opposite pair of masses/directed at the same or almost the same side, relayed through the connection.

Along axis by two systems of masses.

The mode that makes possible to create the propulsion force along the axis of the body with the assistance of two systems of masses, as follows: upon the body dynamically balanced relatively the axis of rotation of the body, and which axis is protected against rotation or produced with the possibility to rotate, are located uniformly or uniformly in identical groups around the axis of rotation at least two systems of masses, equal more or less in each system, which are uniformly situated around the axis of rotation in a such way that the mass of the one system uniformly alternates with the mass of the other system, and these masses or the centers of gravity are produced with the possibility to be approached towards the axis and be taken away from it along equal in each system trajectories in a way that when the body rotates, the masses, rotated together with the body, or their centers of gravity move along equal in each system orbits, which centers are constantly displaced in constant direction relatively the axis of rotation of the body, and with this, the shape, dimensions and displacement of the orbits of masses at least in one system are changeable when the body rotates and (or) rests, and moreover, when the masses of all systems are equal to each other, the trajectories and the orbits of motion of all masses or the ones of their centers of gravity are equal and identically inclined to the axis of rotation of the body, and the centers of orbits of different systems are uniformly situated around the axis of rotation of the body, with equal displacements relatively it, the summed linear propulsion force is created along the axis of rotation of the body.

Along axis by two masses.

The mode that makes possible to create the propulsion force along the axis of the body with the assistance of two masses, as follows: upon the balanced body are located at least two masses, which are situated uniformly round the axis of rotation, and these masses or their centers of gravity are produced with the possibility to be approached towards the axis and be taken away from it in a such way that when the body rotates, the masses, rotated together with the body, or their centers of gravity move each one along its orbit, which and their centers are constantly displaced in constant direction relatively the axis of rotation of the body, and by this, the shape and dimensions of the orbit, as well as the value and direction of displacement of the center of the orbit/at least of one mass, are changeable when the body rotates and (or) rests, and moreover, in case when the masses are equal, the trajectories and orbits of mass motion, or the ones of their centers of gravity are equal to each other and identically are inclined towards the axis of rotation of the body, the centers of orbits are equally displaced relatively the axis and are situated uniformly around it, and the masses move in step and symmetrically relatively the axis/thus/the summed linear propulsion force is created along the axis of rotation of the body.

Eccentric axis-crank. Along the axis.

The mechanical facility with the axis-crank where upon the cone-like element is located the even number of the guides, inclined towards the axis/with the weight on each of them and the driving racks, that are alternated and connected with the driving kinematic pairs or chains oppositely the motion and by this, permitting, when the element rotates/to create the double directed disbalance, which summed action is directed along the axis of rotation of the element.

Cam mechanism. Along the axis.

The mechanical facility with the cam mechanism where there is the imovel axis-support with the imovel cam, and on the balanced cone-like element, situated on this axis-support with the possibility to rotate, is located the even number of the guides, inclined towards the axis, with the weight on each of them and the pushers and levers, being alternated, are connected with the driving kinematic pairs or chains oppositely the motion, permitting, when the element rotates, to create the double directed disbalance, which summed action is directed along the axis of rotation of the element.

The wobble plate. Racks-gears. Along the axis.

The mechanical facility with one wobble plate where upon the cone-like element is located the even number of equal radiant guides, inclined to the axis of rotation, with the movel weight on each of them, and the racks, fixed to the upper ring of the wobble plate, being alternated, are chained with the gearwheels oppositely the motion, thus permitting, when the element rotates, to create the double directed disbalance, that attaches to the element the linear propulsion force, which summed action is directed along the axis of rotation of the element. Or with two wobble plates on the drive shaft at different sides of the element, and the racks, fixed to the upper rings of each of them, are chained : with the 9ear-wheels on the element in a such way that the rack of one wobble plate is alterated with the rack of another one, thus creating the additional possibility to change the direction of the linear propulsion force,

The wobble plate. Cams-screw shaft. Along the axis.

The mechanical facility with the wobble plate where upon the drive shaft is fixed the cone-like element on which is located the even number of equal radiant guides, inclinated to the axis of rotation, with the movel weight on each of them, and the screw shafts, being alterated, are produced with the opposite thread in a such way that in the equal position of the cams, or hinges on the wobble plate, the screw shafts move and possibilitate moving of the weights along the guides oppositely the motion, thus permitting, when the element rotates, to create the double directed disbalance that attaches to the element the linear propulsion force, which summed action is directed along the axis of rotation of the element.

In these modes and facilities the difference between the centrifugal forces and the forces of reaction of support creates the double directed disbalance, including under the equal angles to the axis of rotation of the body at different sides, thus provoking the summed linear propulsion force along the axis of rotation.

Due to the mentioned modes and facilities, it becomes possible to create, in principle, new and independent from the external environment, propulsive devices foe the mobile means, deprived of the shortcomings of the traditional propulsive devices, and suitable for more widened practical usage because of using to achieve the goals only the rotation of the body, without applying external additional forces.

The character and the technical data of the facilities make possible their usage as the propulsive devices, or counterinertial facilities in different means of transportation, including the improvement of the known equipment and creation of the types of transport with early unknown properties.

Flying vehicle.

The all-wheel-drive vehicle where in the sphere of each wheel ace fixed the facilities and the rotating moment from the engine or engines of the vehicle instead of the drive wheels, or simultaneously with the drive wheels is transmitted in step to all facilities which ones while rotate create the propulsion force, that keep the vehicle moving, or create the counterinertial propulsion force, that brakes the movement, at the needed direction, and by this, the vehicle is guided by the common mechanisms of control, or the ones in combination with the additional facilities, making this vehicle to be capable of breaking ground and moving under control in the air.

Flying motorcycle.

The motorcycle where at least in the sphere of wheels or wheels and the engine is located at least one facility, and in the sphere of the front wheel also it is equipped with the additional transmission of gear from the engine, and the rotating moment from the engine or engines instead of the drive wheel or simultaneously with the drive wheel is transmitted in step to all the facilities which ones while rotate create the propulsion force that keep moving the motorcycle, or create the counterinertial propulsion force that brakes the movement, at the needed direction, and by this, the moving of the moto is guided by the common for the moto mechanisms of control that relay also the commands to the facilities through normal mechanisms in combination with the additional mechanisms of control for the facilities, making this motorcycle to be capable of breaking ground and moving under control in the air.

Vehicle with facility mounted at the bottom.

The vehicle where as the main and additional propulsive device is used the facility, mounted in the sphere of the bottom or bottom and the top, which one, while rotates, creates the propulsion force , that keep the vehicle moving, or creates the counterinertial propulsion force, that brakes the movement, at the needed direction, and by this, the parameters of the directed disbalance of the facility are changed by common mechanisms of control of vehicle with the additional step drives for the facility, or the parameters of the facilities are changed by the special for the facilities independent mechanisms of control.

Flying disc.

The aerial and outerspace apparatus of "flying disc" type where as the propulsive device are used two facilities, located in alignment, connected one to another with the possibility to rotate relatively one to another, and that are rotate to the opposite sides, between which ones or in the central part of which are located the power plant and the useful volume.

Flying reel.

The aerial and outerspace apparatus of "Flying reel" type where as the propulsive device are used two facilities with separated elements, connected in alignment one inside another with the possibility of relative rotation, or here is used one main facility, with separated elements, that is connected in alignment with two additional, equal and located mirror-like at its different sides facilities, produced with the possibility of relative rotation, and the facilities are rotated relatively each other oppositely, in a such way that their counterrotation is neutralized, and around the facilities there is a rigid construction, inside of which are located the power plant and the useful volume, while the shape and dimensions of the construction are determined by the shapes and dimensions of the propulsive device, as well as by the designation of a such apparatus.

SHORT DESCRIPTIONS OF DRAWINGS.

Fig.1. The schematic diagram of implementation of the Directed Disbalance Mode upon the body in rotation: a) version with perpendicular to the axis of rotation trajectories of motion of masses; b) version with the tilted trajectories of the motion of masses.

Fig.2. The diagram of changing of the linear speed and of centrifugal forces of moving masses.

Fig.3. Epures of: a) centrifugal forces of masses; b) sum of centrifugal forces of masses and of forces of reaction of support (body).

Fig.4. The schematic diagram of implementing of the Directed Disbalance by equal and of different orbits masses.

Fig.5. The schematic diagram of implementing of the Directed Disbalance by masses of different values and different orbits.

Fig.6. The schematic diagram of attaching to the body the longitudinal motion with two systems of moving masses that move along the inclined (tilted) trajectories.

Fig.7. The facility with the eccentric axis-crank.

Fig.8. The facility with the eccentric axis-crank for the propulsion force along the axis.

Fig.9. The facility with the imovel cam and several weights.

Fig.10.The facility with the imovel cam and several weights for the propulsion force along the axis.

Fig.11.The facility with the wobble plate and driving racks.

Fig.12.The facility with the wobble plate and driving racks for the propulsion force along the axis.

Fig.13.The facility with two wobble plates, driving racks and separated elements.

Fig.14.The facility with the wobble plate and driving cams on the screw shafts.

Pig.15.The facility with the wobble plate and driving cams on the screw shafts for the propulsion force along the axis.

Fig.16.The facility with two wobble plates, driving cams on the screw shafts and separated elements.

Fig.17.The facility with the wobble plate, driving chain and one weight.

Fig.18.The facility with the wobble plate, driving chain and separated elements with one weight on each element.

Fig.19.The facility with the wobble plate and two weights on the screw shaft.

Fig.20.The facility with two wobble plates and screw shafts upon the separated elements.

Fig.21.The facility with the wobble plate and shears-like drive.

Fig.22.The facility with the wobble plate and hydraulic drive.

Fig.23.The flying vehicle.

Fig.24.The flying motorcycle.

Fig.25.The vehicle with the facility at the bottom.

Fig.26.The flying apparatus of "Flying disc" type.

Fig.27.The flying apparatus of "Flying reel" type.

THE BEST VERSION OF IMPLEMENTATION OF THE INVENTION.

METHODS.

Several masses.

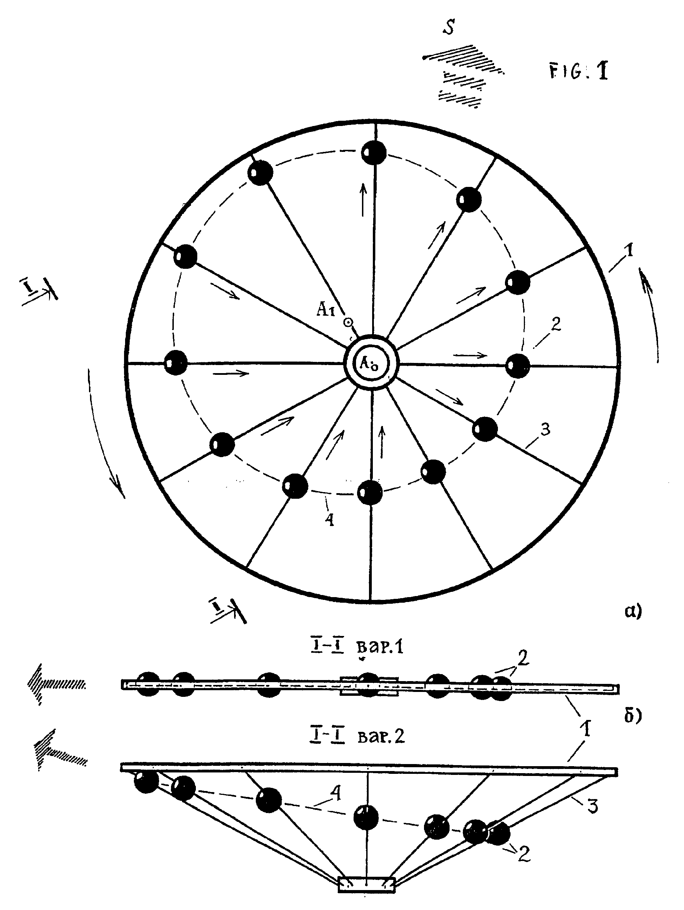

Upon the dynamically and (or) statically balanced relatively the axis of rotation body I (Fig.1), which axis Ao is protected from rotation or is produced with the possibility to rotate, are located uniformly or uniformly in equal groups around the axis of rotation Ao the equal masses, produced with the possibility of moving away of each mass or of its center of gravity from the axis of rotation of the body Ao and of approaching to this axis along the equal trajectories 3, and when the body 1 rotates, the masses 2 or their centers of gravity are moved away from the axis of rotation Ao of the body 1 under the influence of the force of inertia, or the force of inertia in combination with the force, converted from the force of rotation of the body at the beginning of the trajectory of moving away, and then, they are approached to the axis Ao under the influence of the force, converted from the force of rotation of the body Ao, that rests upon the body I or the axis Ao in identical for each mass 2 point or group of points, in cycle during the complete rotation of the body 1 around the axis Ao in a such way that masses 2, rotated together with the body 1, or their centers of gravity move in tern along the closed convex orbit 4 around the axis of rotation Ao of the body 1, or that passes through the axis Ao, which center AI is always displaced in constant, relatively the axis of rotation Ao of the body 1, direction S, planed or unplaned, resulting that the sum of vectors of centrifugal forces, used by the masses 2 for simultaneous action upon the body I, as well as the sum of vectors of forces of reaction of support 1 or Ao on approaching of the masses 2, create the directed disbalance, that attaches to the body 1 the linear propulsion force across the axis of its rotation Ao, having the value and the shape of the orbit 4, as well as the value and the direction of displacement of the center AI of the orbit 4 as changeable when the body 1 rotates and (or) rests, and due to the mentioned, the value and the direction of action of the linear propulsion force are changed.

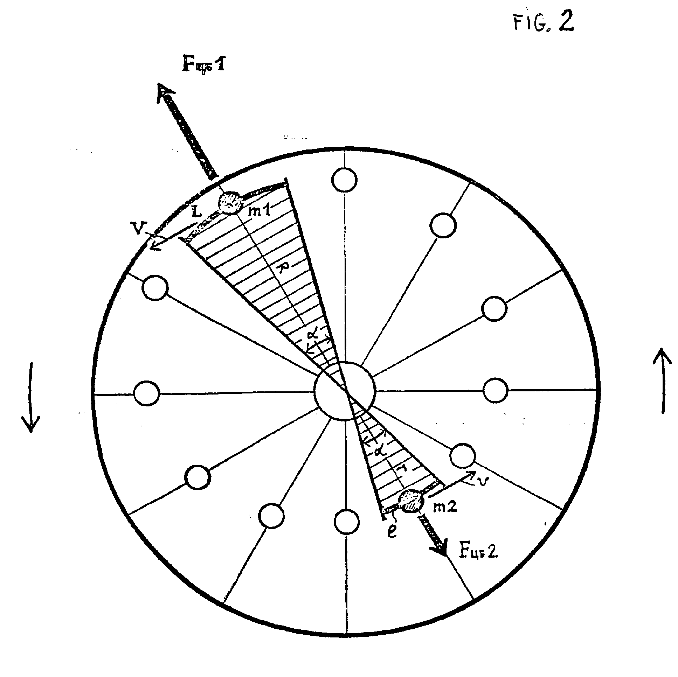

Considering the centrifugal forces *Fcb1* and *Fcb2* (Fig.2), which are used by two equal masses *m1* and *m2,* located oppositely, to influence on the body 1, respectively at the maximum distance R and minimum distance r from the axis Ao on the orbit 4, that rotate at a speed *V* and *v* each one, there terns to be clear/that with the difference between radiuses of their motion two times: *R=2r,* the speeds of motion *V* and *v* will be determined by the lengths of their ways *L* and *l* during the equal time.

With their small values, L and 1 will be equal to the parts of lengths of circumferences by the radiuses R and r, to be calculated by the formula:

$$L = 2\pi R \ \frac{a}{360°}$$

and with equal angles $\alpha$, these ways will be also differed in two times, *L=2l,* that means that the speed *V* of the mass m1 will be two times more than the speed $\nu$ of the mass *m2,* it means, *V=2v,* and that is in accordance with the formula of the centrifugal force:

$$Fcb = \frac{mV^2}{R},$$

(where: *m* - mass, *V* - speedy, *R* - radius of rotation),
with equal masses *m1* and *m2,* it gives the difference in centrifugal forces *Fcb1* and *Fcb2,* as the difference between square speeds *V* and *v*, divided into the radiuses *R* and *r*, that's why it is as follows:

$$Fcb1 > Fcb2, \text{ as } \frac{V^2}{R} > \frac{v^2}{r}$$

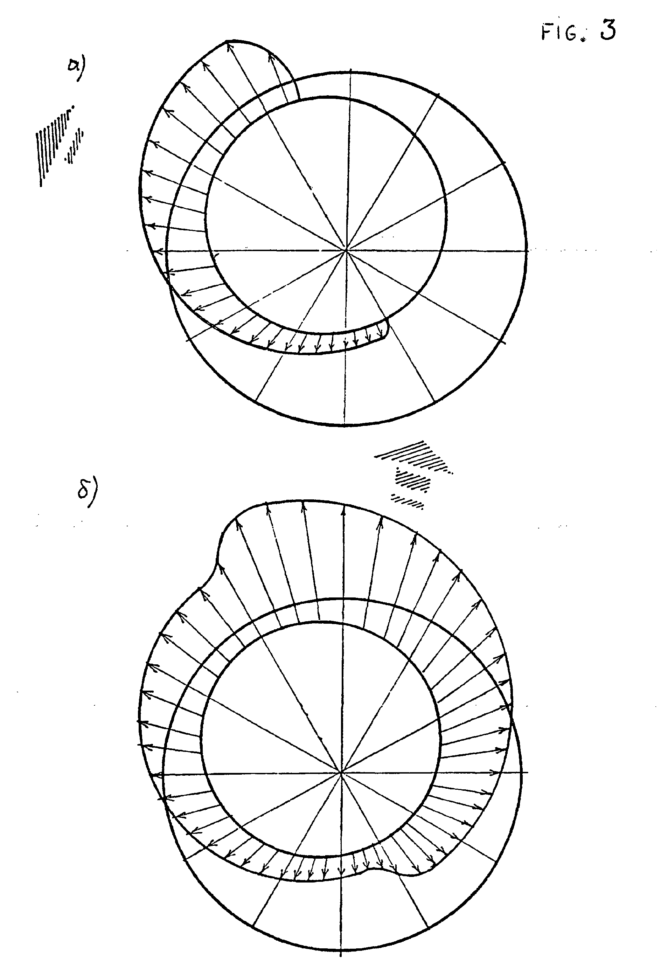

So far as in this case the simple enlarging of the radius leads to increasing of square speed, the centrifugal force *Fcb1* of the mass *m1* is inevitably increased relatively the centrifugal force *Fcb2* of the mass *m2.* The simultaneous and summed influence upon the body of centrifugal forces of two or more masses, which epure is given in the Fig.3a, creates the directed disbalance.

The force to approach the masses towards the axis of the body is applied to the axis or to the proper body at the equal for each mass group of points. By this, according to the 2d Newton's law, is created the force of reaction of support-body, which is directed oppositely the approaching , i.e. at the same or almost the same side as the summed vector of centrifugal forces, increasing the linear propulsion force and somehow changing its direction (Fig. 3b).

The weights , kept when the body rotates in the interval between extremely near to the axis and extremely distant from the axis points of the orbit, are balancing each other at the opposite sides of the axis, eliminating the non-productive lateral beating and attaching to the propulsive force the perfect linear direction. When the number of weights increased, the angle of action of the propulsive force is narrowed, the number of impulses of force, with the equal speed of rotation, is enlarged, and the value of force is increased due to the summing of vectors of centrifugal forces and forces of reaction of support of all the weights. All these attaches to the propulsive force more smoothless and effectiveness.

The linear propulsive force, capable of moving the rotated body, is created in the presence of such value of masses, dimensions of orbits of masses, value of displacement of the center of orbits relatively the axis of rotation of the body, as well as of the speed of rotation of the body, when the summed vector of centrifugal forces of all moving masses, that influence simultaneously upon the body, and as well the forces of reaction of support, is superior of the values of forces of inertia, friction and, or of gravity, that influence upon the body, and this difference, i.e. the linear propulsive force, can be changed by changing of any of the mentioned values.

In accordance with calculations, when the wheel with radius of 1 m, having eight moving weights upon it, of a mass of 1 kg each, with the displacement of the orbit of the weights from the axis of the wheel at 40% of diameter of the orbit, with the speed of 1200 rpm, is created the propulsive force of 14 tons. And with the changing of the speed of rotation, the propulsive force is changed almost in a square.

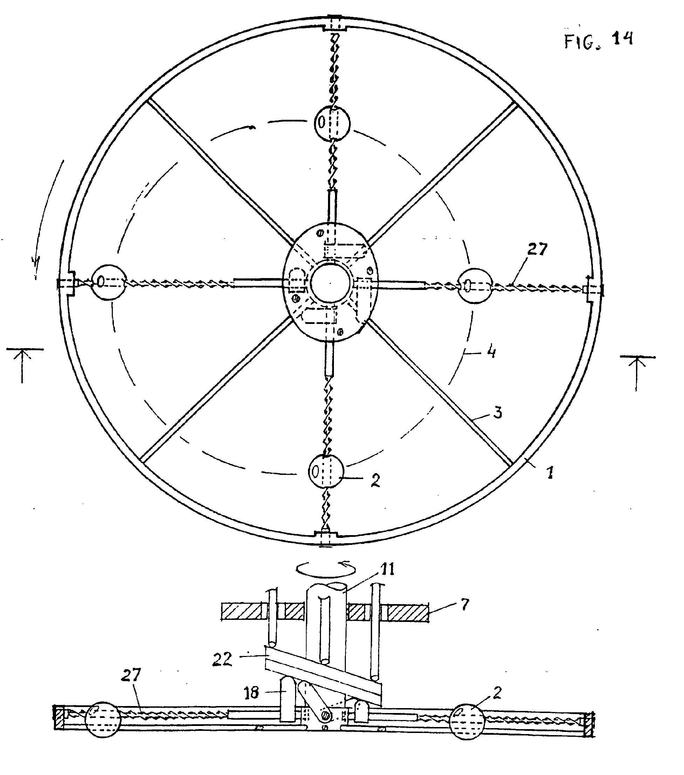

The calculations are proved by the acting experimental facility (Fig.14). The directed disbalance can be created and by the unique moving mass upon the body. For this, the mass, when the body rotates, is moved in a such way that when the mass approaches to the axis of rotation, its center of gravity preferably coincides with the axis. Moreover, this happens, when the mass is approached towards the axis once during the rotation of the body at the extreme point of approaching, and then is taken away to the opposite side, or when the mass is approached to the axis twice during the rotation of the body, making it to pass each time through the axis to the opposite towards the axis side of the body. In this case the angle of the directed disbalance is reduced twice and the body is less subjected to the non-productive lateral vibrations.

The directed disbalance is created by only one moving mass and also with the assistance of the imovel counterweight, located upon the body oppositely the mass, balancing the mass at one of the points of its trajectory, preferably at the middle one. Practically this is the directed disbalance upon the disbalanced body. Moreover, in the moment of the biggest moving away from the axis the moving mass influences on the body with the bigger centrifugal forces in the middle of the trajectory the centrifugal forces of the mass and of the counterweight are balanced, and in the moment of approaching of the mass towards the axis of the body the bigger is terned to be the value of the centrifugal force of the imovel counterweight. Thus, the summed vector of the centrifugal forces is always directed towards one side of the axis.

Changeable masses.

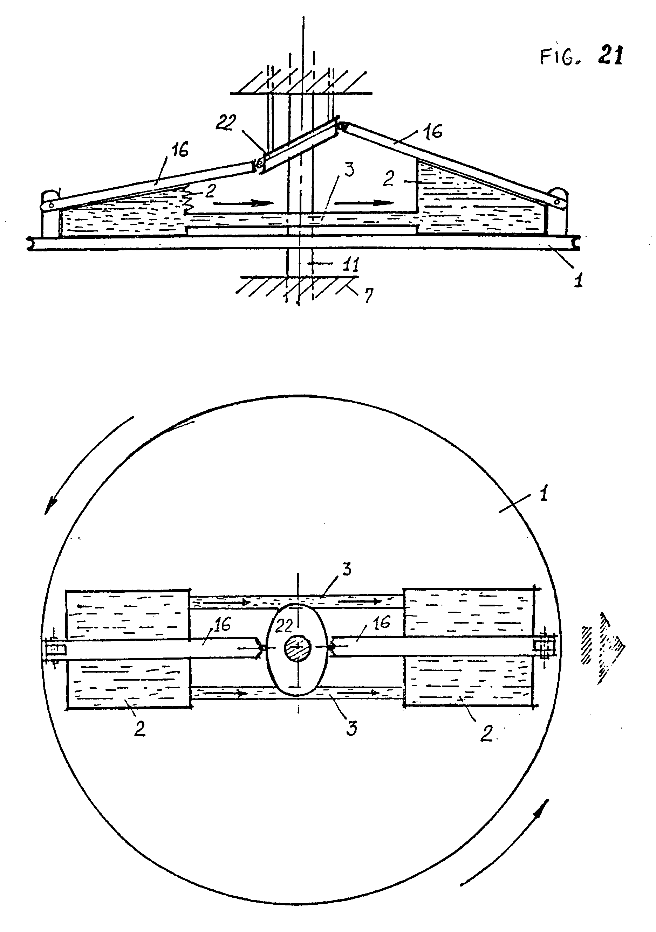

The directed disbalance can be created with the assistance of the masses of variable value in a such way that upon the body are located equal masses, which value (Fig.21) is equally changed, and when the body 1 rotates, these masses 2 are in tern increased until the biggest values in the constant relatively the axis of rotation Ao of the body 1 sector of the orbit, and then are reduced until the minor values in the diametrically opposite sector of the orbit, and again are increased until the biggest values in the previous sector of the orbit, in cycle, during the complete rotation of the body I around the axis Ao due to the flowing of the substance from one mass 2 into the other, or flowing of the substance from each mass 2 into the general and balanced relatively the axis collector, and back, under the influence of applied force to reduce each mass 2, converted from the force of rotation of the body 1, or any other external force, that rests upon the body 1 or the axis Ao at the equal for each mass 2 points.

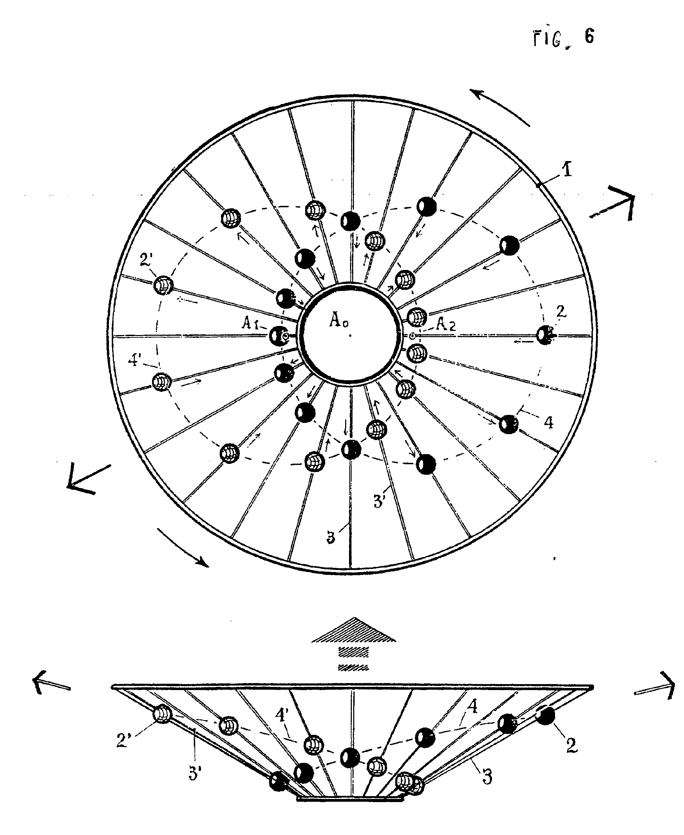

Along the axis by two systems of masses. Upon the body 1 (Fig.6), dynamically balanced relatively the axis of rotation, which axis Ao is protected against rotation or produced with the possibility to rotate, are located uniformly or uniformly in equal groups around the axis of rotation Ao, at least, two systems of masses 2 and 2', equal at least in each system, which are uniformly situated around the axis of rotation Ao in a such way that the mass 2 of one system is uniformly alterated with the mass 2' of the other system, and these masses or centers of their gravity are produced with the possibility to be approached towards the axis Ao and to be taken away from it along the equal in each system trajectories 3 and 3' so that when the body rotates, the masses 2 and 2', rotated together with the body 1, or their centers of gravity move along equal in each system orbits 4 and 4', which centers Al and A2 are constantly displaced in constant direction relatively the axis of rotation Ao of the body 1, and by this, the shape, dimensions and displacement of the orbits 4 and 4' of masses, at least in one system, are changeable when the body 1 rotates and (or) rests, and moreover, in case when the masses 2 and 2' of all systems are equal one to another, the trajectories 3 and 3' and the orbits 4 and 4' of the motion of all the masses 2 and 2' or of their centers of gravity are equal and equally are inclined towards the axis of rotation Ao of the body 1, and the centers of the orbits A1 and A2 of different systems are uniformly situated around the axis of rotation Ao of the body 1, with the equal displacements relatively it, the summed linear propulsion force is created along the axis of rotation of the body 1.

Masses of different orbits.

Upon the body 1 (Fig.4) is situated the equal number of the identical moving masses 2 and 2' of two systems, located in a such way that the mass 2 of one system is mounted diametrically opposite to the mass 2' of the other system, and when the body 1 rotates, the masses 2 and 2' of different systems, rotated together with the body 1, or their centers of gravity, are approached to the axis Ao with the assistance of the force, converted from the force of rotation of the body 1 or from the applied force, that rests upon the body 1 at equal for masses 2 and 2' of one system points, and are taken away from the axis of rotation Ao under the influence of the force of inertia or forces of inertia, in combination with the force, converted from the force of rotation of the body 1 at the beginning of the trajectory of moving away in a such way that during the complete rotation of the body 1, they move along the equal for the masses of each system orbits 4 and 4', different between systems, which centers are constantly displaced in one constant direction relatively the axis of rotation Ao of the body 1, but at different distances from it, in a way that the distance from the axis of rotation Ao of the element 1 until the masses or centers of gravity of the masses 2' of one system, which orbit 4' is smaller, with their maximum distance from this axis Ao, is equal to the distance from this axis of rotation Ao until the masses 2 or until centers of gravity of the masses of the other system, which orbits 4 are bigger, with their minimum distance from the axis of rotation Ao of the element 1.

Differently to the case when (Fig.1) the orbits of the moving masses 2 are equal and each two opposite masses 2 are balancing each other twice during the complete rotation of the body, in the direction, that is perpendicular to the direction of displacement of the center Al of their orbits 4 relatively the axis Ao of rotation of the body 1, thus, attaching to the linear force the narrowed directory, and in case with masses of different orbits (Fig.6), such balancing happens once during the complete rotation of the body 1 and in the direction, that coincides with the direction of displacement of the center Al of the orbits 4 and 4'.All the other time the summed action of the centrifugal forces of the opposite masses 2 and 2' creates upon the body 1 the variable directed disbalance/which sector of action is twice wider. The peak of value of the directed disbalance also happens once during the complete rotation of the body 1 at the direction of displacement of centers Al of the orbits 4 and 4', but with the shift on half a period of phase of rotation of the body, in comparison with the balanced state.

Different masses.

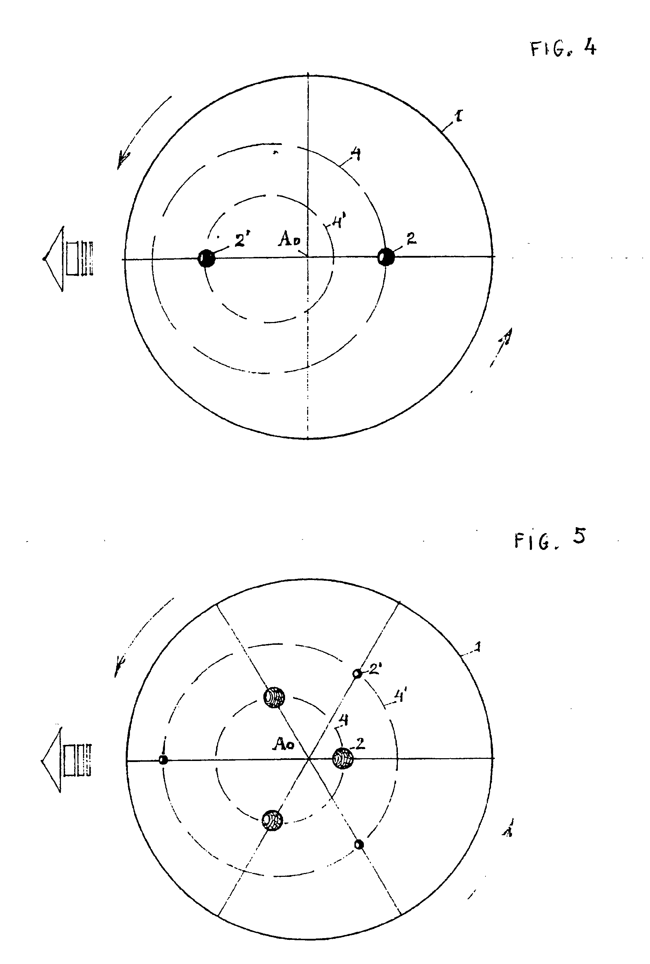

Upon the balanced body 1 (Fig.5) is located the even number of masses 2 and 2'of two systems, equal in each system, but different between systems, situated upon the body I in a such way that the mass of one system is mounted diametrically opposite to the mass of the other system, and when the body 1 rotates, the masses 2 and 2', rotated together with the body 1, or their centers of gravity, are approached to the axis of rotation Ao of the body 1 by the force, converted from the force of rotation of the body, that rests upon the body or the axis at equal for masses of each system points, and the masses are taken away from the axis under the action of forces of proper inertia, so that the masses of different systems or their centers of gravity move during the complete rotation of the body along, the equal in each system, but different between systems, orbits 4 and 4', which centers in both systems are constantly displaced in one constant, relatively the axis of rotation Ao of the body 1, direction, so that the orbit 4 of each bigger mass 2 is less than the orbit 4' of each minor mass 2' of the other system, and the difference between values of the centrifugal forces of the masses of different systems and forces of reaction of support, when the masses pass the identical sector of the orbits 4 and 4', is equalized due to the difference between values of their orbits and (or) difference in displacement of centers of their orbits relatively the axis of rotation Ao of the body 1.

Two systems of separated masses.

Upon the body 1 (Pig. 13) are located at least two systems of the masses 2 and 2', which trajectories 3 and 3' and orbits 4 and 4' of motion, or of motion of the centers of gravity are situated at some distance from the masses of the other system along the axis of rotation Ao of the body 1, and the centers of the orbits are constantly displaced at the constant direction relatively this axis Ao, and by this, the value of the orbits 4 and 4', as well as the value and direction of displacements of the center of orbits of masses 2 and 2', at least, in one system of masses, are changeable when the body rotates 1 or, and rests, so due to the mentioned, in different parts of the body 1 is created the linear propulsion force, which summed direction is changeable in space, and the body 1 is capable to move along the complicated space tajectory.
Connections between pair of masses.

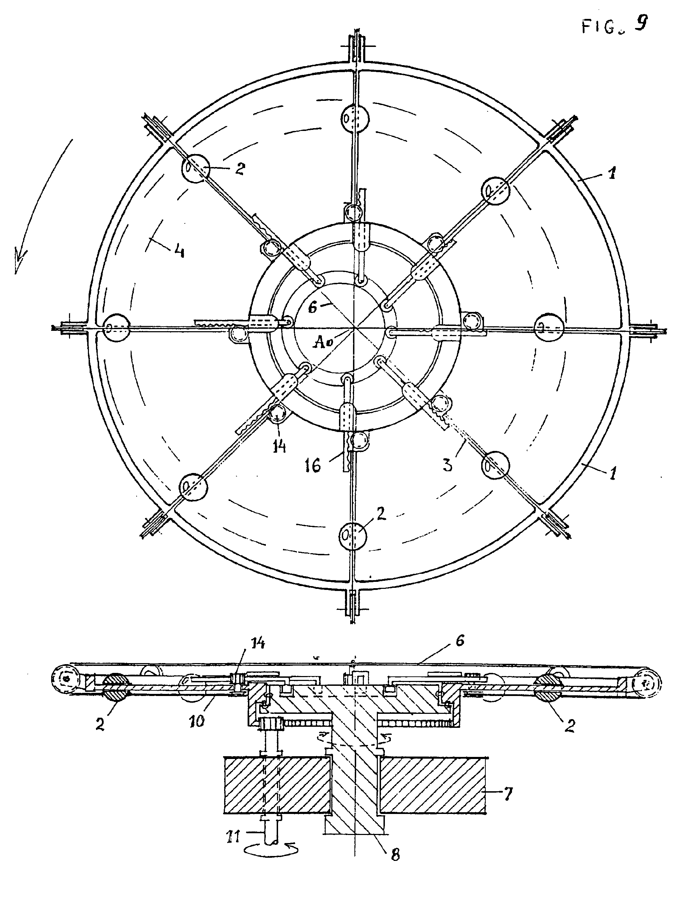

Upon the body 1 (Fig.9) is located the even number of moving masses 2 at least of one system, and each two opposite masses 2 of the system are connected one to another in pair by equal connections 6, moreover, the forces to approach the masses 2 to the axis of rotation Ao are applied to these connections 6 or to the masses 2, and when the body rotates 1, the value of force, needed to approach each mass 2 towards the axis Ao of the body 1, is reduced due to the partial compensation of this force, or partial compensation that terns to be the complete one at the parts of the trajectory, by the force of inertia of the opposite mass of pair, directed at the same or almost the same side, that is relayed through the connection 6.

One mass.

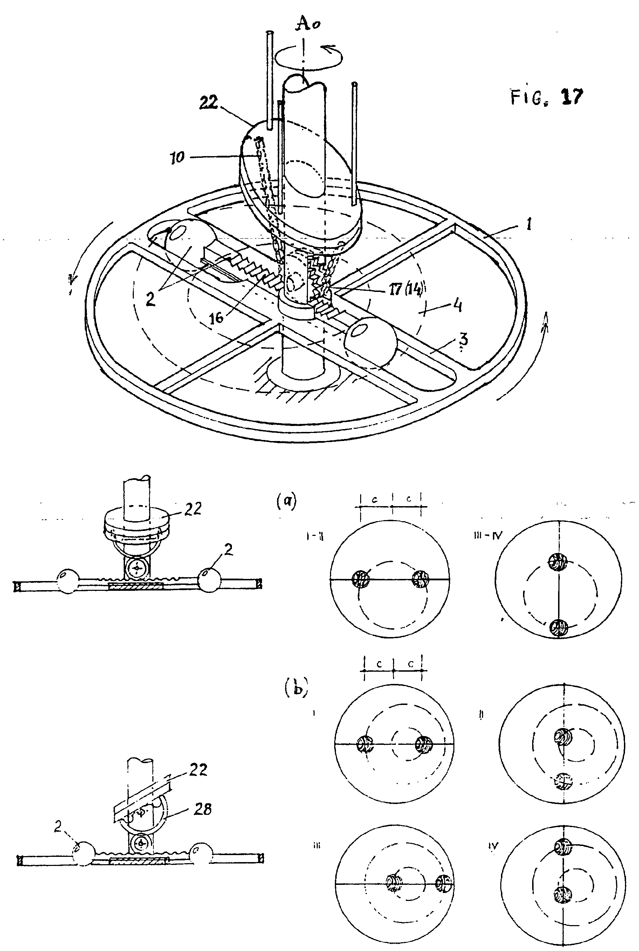

Upon the dynamically and (or) statically balanced relatively the axis of rotation body 1 (Fig.17), which axis Ao is protected against rotation, or is produced with the possibility to rotate, is located the mass 2, which is done, or which center of gravity is done with the possibility to move away from the axis Ao of the body 1 and to approach to the axis Ao along the constant trajectory, and when the body rotates 1, the mass 2 or its center of gravity is moved from the axis Ao under the influence of the force of inertia, or the force of inertia in combination with the force, converted from the force of rotation of the body 1, or any other applied force at the beginning of the trajectory of moving away, and then the mass 2 or its center of gravity is approached to the axis Ao under the force, converted from the force of rotation of the body 1 or any other applied force/that rests upon the body 1, or upon the axis Ao, in cycle during the complete rotation of the body 1, or the mass 2 or its center of gravity are taken away, returned into the previous position, and again move away through the axis Ao by the opposite side, and then again return in cycle during the complete rotation of the body 1, achieving its maximum displacement in the constant relatively the axis of rotation Ao of the body 1 direction, in a such way that the mass 2, rotated together with the body 1, or its center of gravity moves along the closed convex orbit 4, planed or not planed, that passes through the axis Ao of the body 1, or around the axis Ao of the body 1, which center is constantly displaced in the constant direction relatively the axis of rotation Ao of the body 1, resulting that the sum of centrifugal forces at different points of the trajectory and forces of reaction of support regarding the approaching of the mass, creates the directed disbalance, that attaches to the body 1 the linear propulsion force across the axis of rotation Ao, having the value and the shape of the orbit 4 of center of gravity of the mass 2, as well as the value and direction of displacement of center of the orbit as changeable when the body 1 rotates or rests, and due to the mentioned, the value and direction of action of the linear propulsion force is changed.

One mass and counterweight.

The variety of the previous is the mode where the trajectory of motion of the moving mass 2 upon the body 1 does not intercross the axis Ao of rotation of the body 1, and upon the body 1 is located in addition the imovel counterweight 5, situated oppositely to the mass 2, in a such way and of a such weight that it balances the mass 2 at any point of its trajectory 4, preferably located in the middle of the trajectory 3, and produced with the possibility to change the eccentricity C, and due to the counterweight 5 when the body 1 rotates, is narrowed the sector of action of the directed disbalance, and when the eccentricity C of the counterweight 5 changes, the direction of such a sector is changed.

One changeable mass.

Or the directed disbalance, by analogy, is created with the assistance of one mass of varying value in a such way that the value of the mass is changed, for example, by flowing of the substance of the mass into the balanced relatively the axis of the body collector and back, and when the body rotates, the mass is reduced until the minor value in the constant relatively the axis of rotation sector of the orbit, by the force, converted from the force of rotation of the body, that rests upon the body, and then, is increased until the biggest value due to the flowing of the substance of the mass under the action of the force of inertia in the diametrically opposite sector of the orbit, and then, again is reduced until the minimum value in the previous sector of the orbit by the force, converted from the force of rotation of the body, in cycle, during the complete rotation of the body around the axis.

Two separated masses.

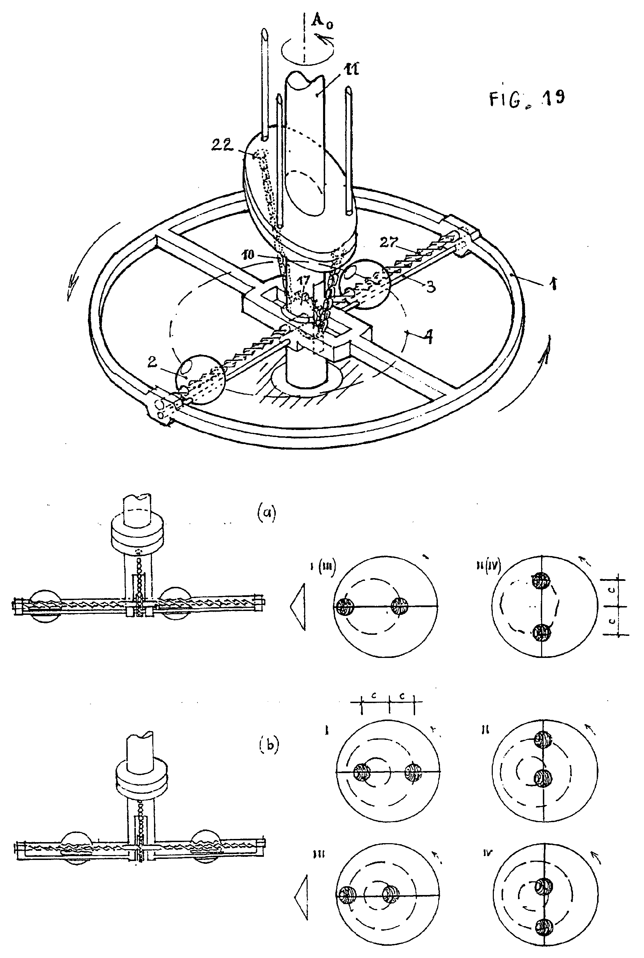

Upon the body I (Fig.19) are located two equal masses 2, which trajectories and orbits 4 of motion, or of motion of their centers of gravity are situated at some distance one from another along the axis of rotation Ao of the body 1, and the centers of the orbits are constantly displaced in constant for each mass 2 direction relatively this axis Ao, and with this, the value of the orbit 4 as well as the value and direction of displacement of the center of the orbit 4 at least of one mass 2 are changeable when the body 1 rotates and (or) rests, and due to this in different parts of the body 1 is created the linear propulsion force, which summed direction is changeable in space, and the body 1 is capable of moving along the complicated space trajectory.

Along the axis by two masses.

Analogically to the previous, is created the double directed disbalance by two masses, related to different systems each of them in a such way that upon the body 1 are located, at least, two masses 2 and 2', which are uniformly situated around the axis of rotation Ao, and these masses 2 and 2' or their centers of gravity are produced with the possibility to be approached to the axis and be taken away from it so that when the body 1 rotates, the masses 2 and 2', rotated together with the body 1, or their centers of gravity move each one along its orbit 4 and 4', which and which centers are constantly displaced in constant direction relatively the axis of rotation Ao of the body 1, and by this, the shape and the dimensions of the orbit, as well as the value and direction of displacement of center of the orbit at least of one mass 2 and 2' are changeable when the body 1 rotates and (or) rests, moreover, in the case, when the masses are equal, the trajectories 3 and 3' and the orbits 4 and 4' of motion of the masses 2 and 2', or of their centers of gravity are identical one to another and equally are inclined to the axis of rotation Ao of the body 1, the centers of the orbits Al and A2 are equally displaced relatively the axis Ao and are located uniformly around it, and the masses 2 and 2' move in step and symmetrically relatively the axis, thus, the summed linear propulsion force is created along the axis of rotation Ao of the body 1.

In case when the moving masses during the rotation of the body are approached and taken away from the axis along the radiant guides, generally, their linear speed is changed, and the angle speed is kept unchangeable or changeable a little (Fig.1/2).

FACILITIES.

Eccentrical axis-crank.

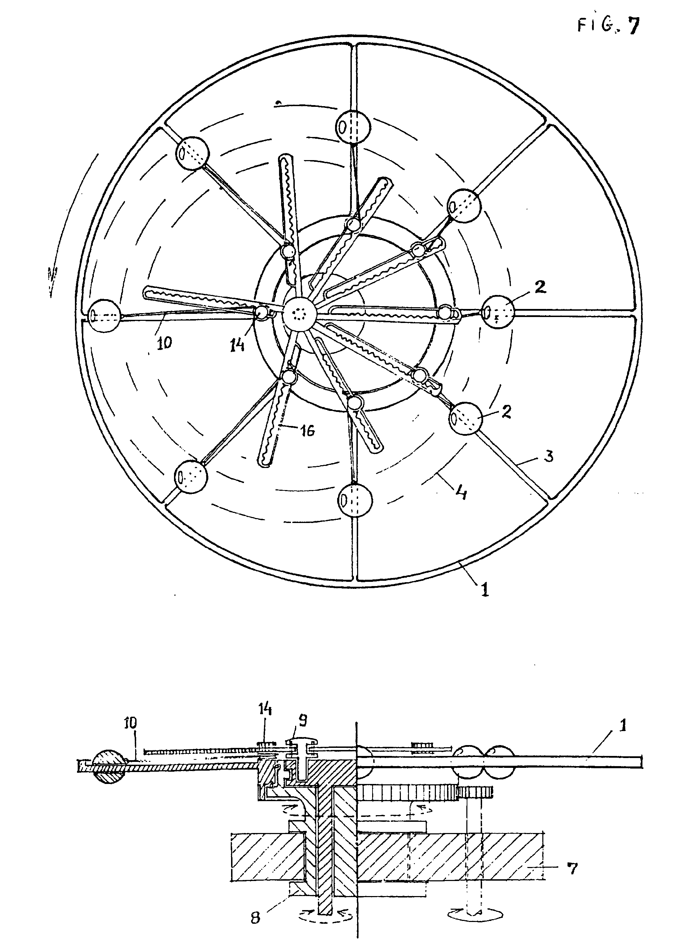

On conventionally imovel base 7 (Fig.7) is situated the axis-support 8, produced with the possibility to rotate relatively this base 7, and upon the axis-support 8 is located with the possibility to rotate relatively it the balanced wheel-like or cone-like element 1, on which equal radiant guides 3, uniformly mounted around the axis-support 8, are fixed equal weights 2, one on each guide 3, produced with the possibility to move along these guides 3, and upon the axis-support 8 is also located in parallel to this one the eccentric and imovel axis-crank 9, which eccentricity is regulated, where is fixed the eccentric mechanism of the group drive with the number of driving racks 16 according to the number of the weights upon the element 1, which of them is firmly chained with the gear-wheel 14, located upon the element 1 in balance around the axis-support 8, at the beginning of each radiant guide 3, and this wheel 14 in alignment is fixed in pair with the sprocket, through which is thrown over the closed driving chain 10, thrown over and tightened as well through the second sprocket 17, situated upon the element 1 in balance, at the end of each radiant guide 3, and to each chain 10 uniformly is chained the corresponding weight 2, or each gear-wheel 14 enters or is connected with the other equal and equally regulated driving kinematic pair or chain, that keeps moving the corresponding weight 2 along the radiant guide 3, and when the element 1 rotates around the axis-support 8, the racks 16 of the group drive in tern and in reverse rotate the gear-wheels 14, which put into action the driving kinematic pairs or chains 10, approaching the weights 2 to the axis of rotation Ao, and then, taking them away at the beginning of the moving away and/or permitting them to move away from the axis of rotation Ao under the influence of forces of proper inertia in a such way that during each rotation of the element 1 around the axis-support 8, weights 2, rotated together with the element 1, move in tern around the axis of rotation Ao along the closed convex orbit 4, which center is constantly displaced in constant direction relatively the axis of rotation Ao of the element 1, thus creating the directed disbalance, and moreover. when the value of the eccentricity of the axis-crank 9 changes, as well changes the value of displacement of center of orbit of the weights, and when the axis-support 8 rotates relatively the base 7, is changed the direction of displacement of center of the orbits and the direction of the disbalance.

Eccentrical axis-crank. Along the axis.

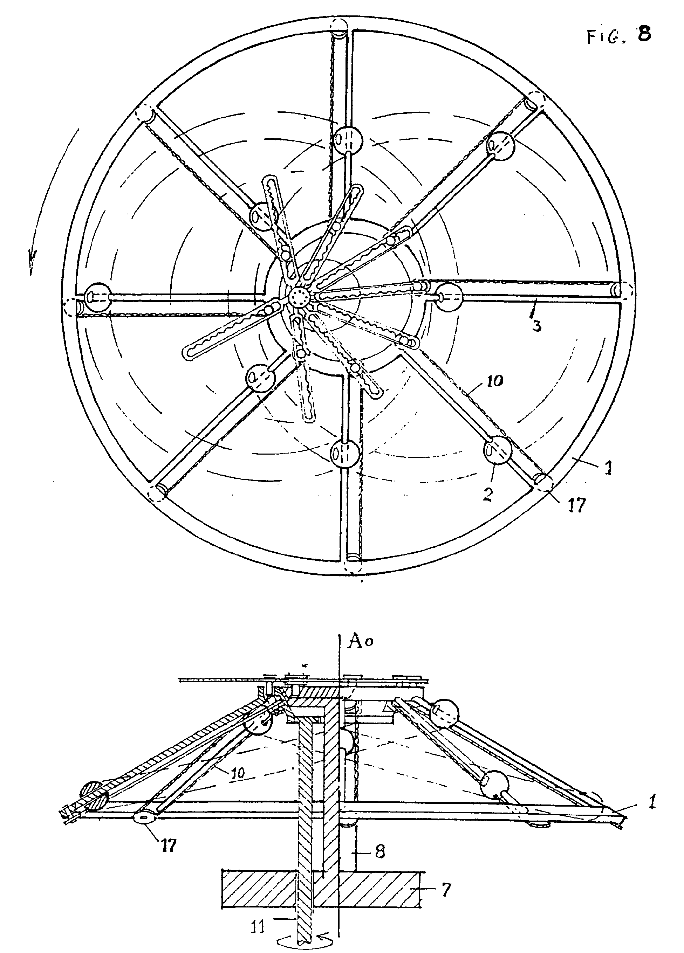

Upon the base 7 (Fig.8) is located the imovel axis-support 8, and on the cone-like element 1 is situated the even number of the inclined towards the axis Ao guides 3 with the weight 2 on each of them, and driving racks 16, being alterated, are connected with the driving kinematic pairs or chains 10 oppositely the motion, and this permits when the element I rotates, to create the double directed disbalance, which summed action is directed along the axis of rotation Ao of the element 1.

Cam mechanism. Several weights.

On conventionally imovel base 7 (Fig.9) is located the axis-support 8, produced with the possibility to rotate relatively this base 7, and upon the axis-support 8 is situated with the possibility to rotate relatively it the balanced wheel-like or cone-like element 1, on which equal radiant guides3, uniformly located around the axis-support 8, are fixed equal weights 2, one on each guide 3, produced with the possibility to move along them, and on the axis-support 8 is mounted the known cam mechanism with the imovel and convex cam 18 that possesses the identical pushers 16 or levers according to the number'of the weights 2, and each of them is equally and firmly chained or connected with the corresponding equal gear-wheel 14, which are located upon the element 1 uniformly and in balance, at the beginning of each radiant guide 3, and this gearwheel 14 in alignment is chained in pair with the sprocket 17, through which is thrown over the closed driving chain 10, thrown over and tightened through the second sprocket 17, situated upon the element in balance, at the end of each radiant guide, and to each chain uniformly is chained the corresponding weight 2, or each gear-wheel 14 enters or is connected with the other equal and equally regulated driving kinematic pair or chain 10, that keeps moving the corresponding weight 2 along the radiant guide 3, and when the element rotates I around the axis-support 8, the pushers 16 or levers in tern move on the cam 18, producing the reciprocating or reset-balancing motion, rotate in reverse the gearwheels 14, which put in action the driving kinematic pairs or chains 10, approaching the weights 2 to the axis of rotation Ao, and then moving them away at the beginning of taking away and/or permitting them to move away from the axis of rotation Ao under the influence of forces of proper inertia so that during each rotation of the element Ao around the axis-support 8, the weights 2, rotated together with the element 1, move in tern along closed convex orbits 4, which center is constantly displaced in constant direction relatively the axis of rotation Ao of the element 1, thus, creating the directed disbalance, and moreover, during the rotation of the axis-support 8 relatively the base is changed the direction of displacement of the orbit 4 of the weights 2 and of the directed disbalance.

Cam mechanism. Along the axis.

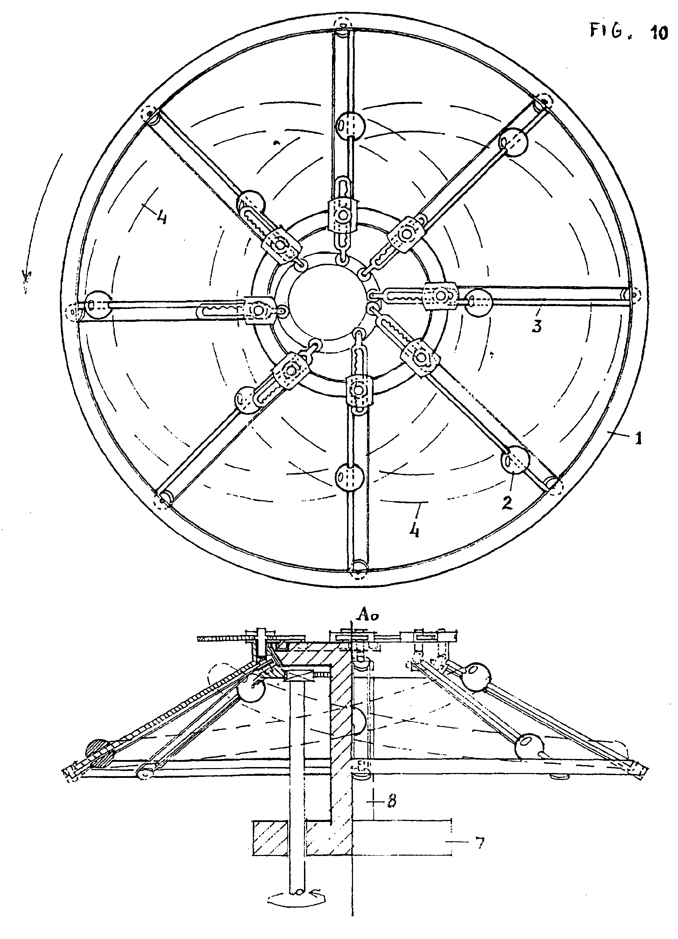

Upon the base 7 (Fig.10) is situated the imovel axis-support 8, and on the cone-like element 1 is located the even number of the inclined to the axis guides 3 with the weight 2 on each of them and pushers 16 or levers, being alternated, are connected with the driving kinematic pairs or chains 10 oppositely to the motion, and thus permitting, when the element 1 rotates, to create the double directed disbalance, which summed action is directed along the axis Ao of rotation of the element 1.

The wobble plate. Racks-gears.

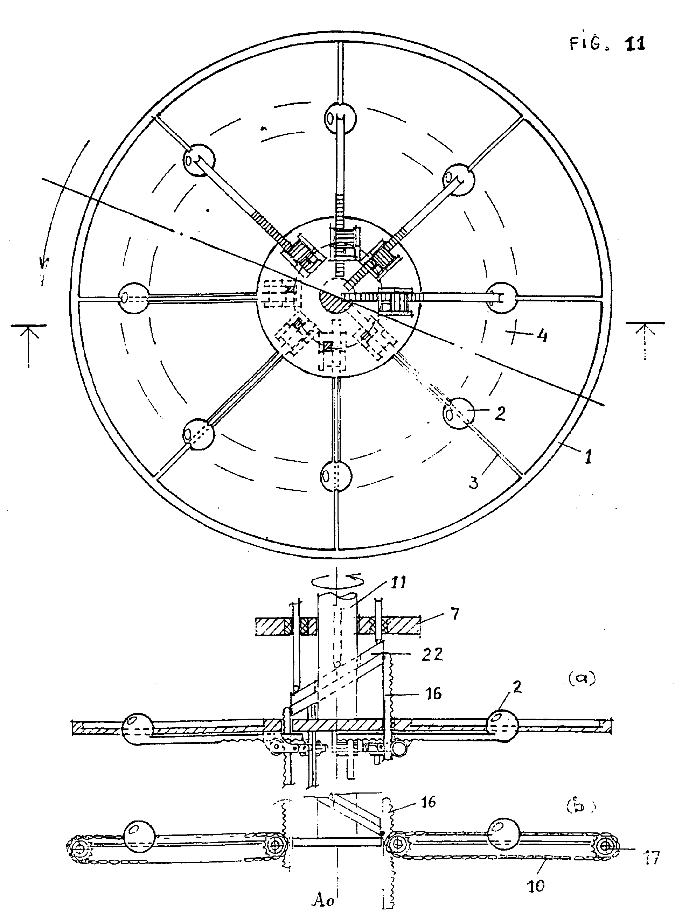

On conventionally imovel base 7 (Fig.11) is fixed with the possibility to rotate the drive shaft 11, where in alignment and firmly is located the balanced wheel-like or cone-like element 1, on which equal radiant guides, situated uniformly around the axis 11, are located the equal weights 2, one on each guide 3, produced with the possibility to rotate along these guides 3, and upon the axis 11, between the base 7 and the element 1 is mounted the known mechanism of the wobble plate 22 with the slide rack, to which upper ring, are uniformly fixed by the ball hinges the equal racks 16 according to the number of the weights 2 on the element 1, produced with the possibility to move along the axis 11, being each one of them uniformly and firmly chained with the gearwheel 14, situated upon the element 1 in balance around the axis 11, at the beginning of each radiant guide 3, and these gear-wheels 14 also are firmly and uniformly chained with the other racks 16, identical one to another, being each of them fixed to the corresponding weight 2, and moreover, the chaining of each pair of such racks 16 with the gear-wheel 14 is done preferably in a such way that both racks 16 simultaneously are chained with the'wheel 14 by their middle parts, and the gear ratios inside such rack drives are equal or different, or these gear-wheels 14 enter or are connected with the other equal driving kinematic pairs or chains, which keep moving the weights 2 along the guides 3 , and when the shaft 11 of the element 1 rotates , the first racks 16 in tern move along the wobble plate 22, rotate in reverse the wheels 14 , which in reciprocating motion push the second racks 16, or put into action the other driving kinematic pairs or chains 10, approaching the weights 2 to the axis of rotation Ao of the element , and then, taking them away from the axis of rotation Ao at the beginning of moving away and/or permitting them to move away from the axis of rotation Ao under the influence of the forces of proper inertia so that during the complete rotation of the element 1, the weights 2, rotated together with the element 1, move in tern along the equal closed convex orbit 4, which center is constantly displaced in constant relatively the axis of rotation Ao direction, thus, creating the directed disbalance/that attaches to the element 1 the linear propulsion force, and moreover, when the slide rack of the wobble plate moves 22 along the shaft 11, the value of the orbit 4 of the weights 2 is changed/when is changed the angle of slope of the wobble plate 22, is changed the value of displacement of the center of the orbit 4, and when the angle and direction of slope of the wobble plate 22 are changed relatively the shaft 11, so change the value and the direction of displacement of the center of the orbits 4 of the weights 2.

The wobble plate. Racks-gears. Along the axis.

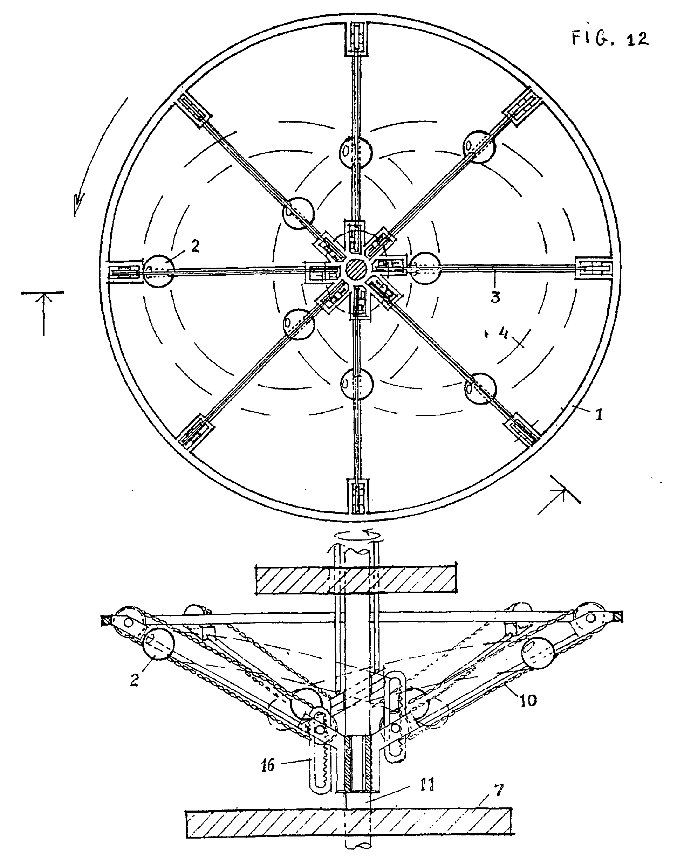

Upon the cone-like element 1 (Fig.12) is located the even number of the equal radiant guides 3 tilted to the axis of rotation Ao, with the moving weight 2 on each of them, and the racks 16, fixed to the upper ring of the wobble plate 22, being alternated, are chained with the gear-wheels 14 oppositely the motion, thus permitting , when the element rotates 1, to create the double directed disbalance, that attaches to the element 1 the linear propulsion force, which summed action is directed along the axis of rotation Ao of the element 1.

The wobble plate. Racks-gears. Along the axis. Two wobble plates.

Upon the shaft 11 are located two independent wobble plates 22, at the different parts of the element 1, and racks 16, fixed to the upper rings of each of them, are chained with the gears 14 on the element 1 so that the rack of one wobble plate is alterated with the rack of the other wobble plate, thus creating the additional possibility to change the direction of the linear propulsion force.

The wobble plate. Racks-gears. Separated weights.

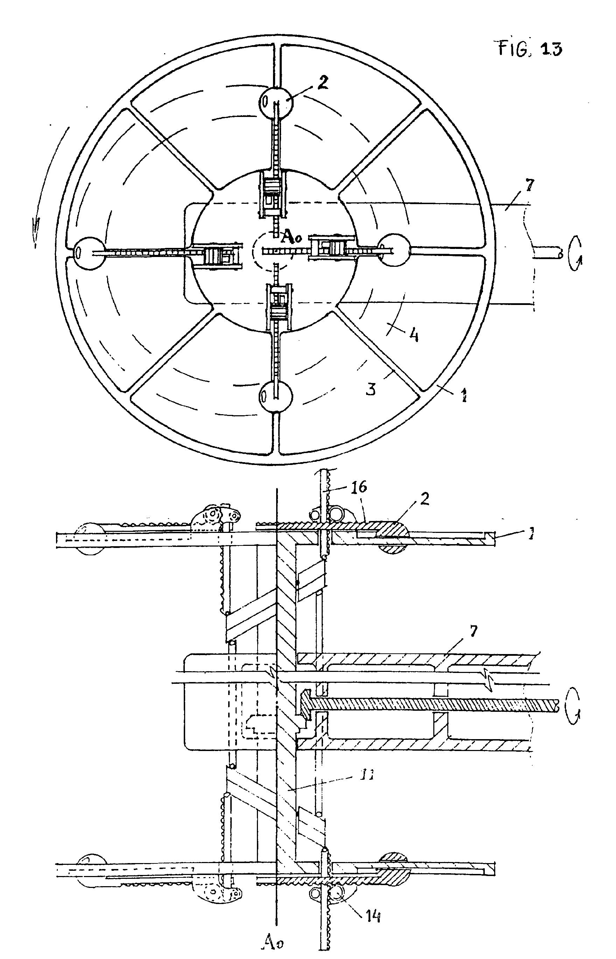

Upon conventionally imovel base 7 (Fig.13) is located with the possibility to rotate the drive shaft 11, on which opposite ends, bulged out of the base 7, in alignment to the shaft and firmly are fixed two balanced wheel-like or cone-like elements 1, having on the equal radiant guides 3 of each of them, uniformly mounted around the shaft 11, are situated the equal for the element weights 2, one on each guide 3, produced with the possibility to move along these guides 3, and on the shaft 11, at some distance from each element 1 along the axis Ao, between the base 7 and each of the element 1, are located two independent wobble plates 22 with the slide racks, one for each element 1, to which upper rings of each of them uniformly in the perimeter are fixed by the ball hinges the equal for each element racks, according to the number of the weights 2 on each of the elements 1, produced with the possibility to move along the shaft 11, and each rack 16 uniformly and firmly is chained with the gear-wheel 14, situated on the corresponding element 1 uniformly and in balance around the shaft 11, at the beginning of each radiant guide 3, and the gear-wheels 14 on each element 1 are firmly and equally chained with the other racks 16, identical to one to another on the element 1, which of them is fixed to the corresponding weight 2/and moreover, the chaining of each pair of such racks 16 with the gear-wheel 14 is done preferably in a such way that both racks 16 are simultaneously chained with the wheel 14 by their middle parts, and the gear ratios inside such rack drives are equal or different/and or these gear-wheels 14 enter or are connected with the other driving kinematic pairs or chains/which keep moving the weights 2 along the guides, and when the shaft rotates 11, the first racks 16 of each element 1 move in tern along the corresponding wobble plate 22, rotate in reverse the wheels 14, which by the reciprocating motion make moving the second racks 16, or put into action the other driving kinematic pairs or chains, approaching the weights 2 to the axis Ao of rotation of the element 1, and then taking them away from the axis of rotation Ao at the beginning of moving away and/or permitting them to move away from the axis of rotation Ao under the influence of the forces of proper inertia, in a such way that during the complete rotation of the elements 1 the weights 2, rotated together with the elements 1, move in tern along the equal for the element 1 closed convex orbit 4, which center is constantly displaced in constant relatively the axis of rotation Ao direction, thus, creating the double directed disbalance at the different ends of the shaft 11, and moreover, when the slide racks of the wobble plates 22 move along the shaft 11, and also when the angles and directions of slope of the wobble plates 22 are changed, on the shaft 11 is created the summed linear propulsion force, which direction is changeable in space.

The wobble plate. Cams-screw shaft.

On conventionally imovel base 7 (Fig.14) is fixed with the possibility to rotate the drive shaft where in alignment to it and firmly is situated the balanced wheel-like or cone-like element 1, on which radiant equal guides 3, located uniformly around the shaft, are mounted the equal weights 2, one on each guide 3, produced with the possibility to move along these guides 3, and upon the shaft 11, between the base 7 and the element 1, is situated the known mechanism of the wobble plate 22 with the slide rack/or produced with the possibility to move along the shaft 11, to which upper ring in perimeter are joined in moving position the equal ball cams 18, or are connected the ball hinges, by their other ends connected to the levers 21 with the possibility to balance the levers, each one of the levers 21 is firmly fixed with one of the equal screw shafts 27, located upon the element 1 uniformly along each radiant guide 3, and produced with the possibility to rotate, and each weight 2 is equally chained with the corresponding screw shaft 27, or these levers 21 are connected with the other equal driving kinematic pairs or chains which approach the weights 2 to the axis along the guides 3, and when the shaft 11 of the element rotates, the cams 18, or the ball hinges in tern move along the wobble plate 22 , balance the levers and rotate in reverse the screw shafts 27, or put into action the other driving kinematic pairs or chains, approaching the weights 2 to the axis of rotation Ao of the element 1, and then permitting the weights 2 to move away from the axis of rotation Ao under the forces of inertia, or moving the weights 2 away at the beginning of the trajectory of moving away so that during the complete rotation of the element 1 the weights 2, rotated together with the element 1, move in tern along the equal closed convex orbit 4, which center is constantly displaced in constant direction relatively the axis of rotation Ao, and due to this, is created the directed disbalance, that attaches to the element 1 the linear propulsion force, and moreover, when the slide rack or the wobble plate 22 move along the shaft 11, the value of the orbit of the weights is changed, with changing of the angle of slope of the wobble plate, is. changed the value of displacement of the center of the orbit, and with the changing of the direction of slope of the wobble plate 22, is changed the direction of displacement of center of the orbit 4 of the weights 2.

The wobble plate. Cams-screw shaft. Along the axis.

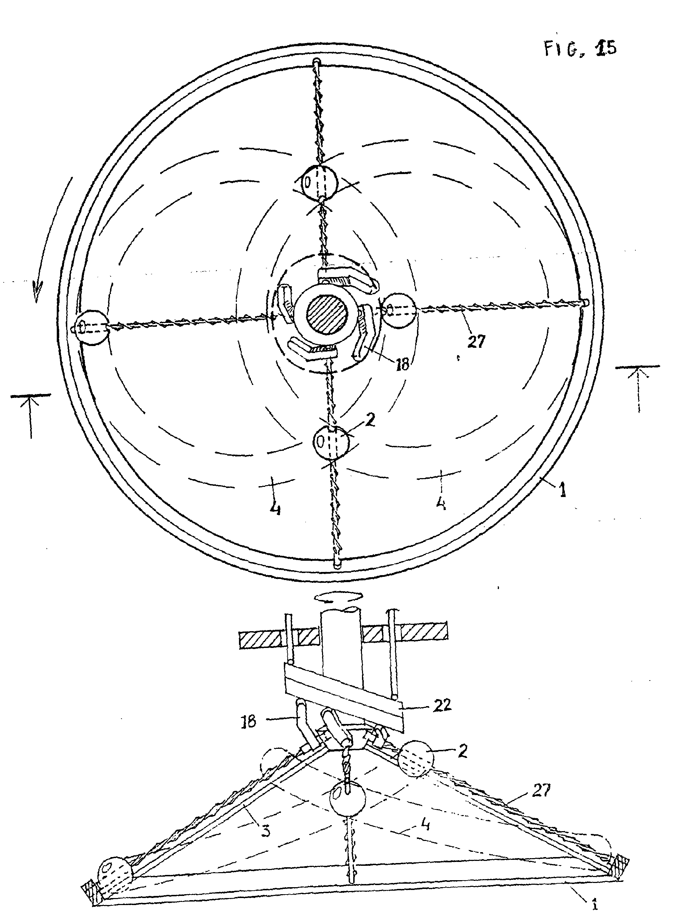

Upon the cone-like element 1 is located (Fig.15) the even number of equal radiant guides 3, tilted to the axis of rotation Ao, with the moving weight 2 on each of them, and the screw shafts 27, being alterated , are produced with the opposite thread in a such way that in the same position of the cams 18, or hinges of the levers 21 on the wobble plate 22, the screw shafts 27 keep moving and permit to move the weights 2 along the guides oppositely the motion, so permitting, when the element 1 rotates, to create the double directed disbalance, that attaches to the element 1 the linear propulsion force, the summed action of which is directed along the axis of rotation Ao of the element 1.

The wobble plate. Cams-screw shaft. Separated weights.

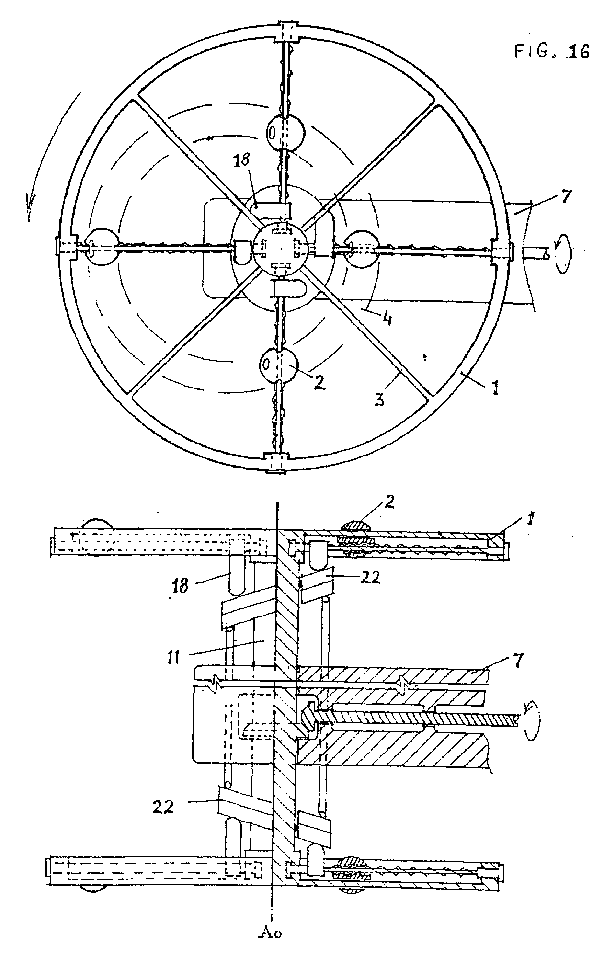

On conventionally imovel base 7 (Fig.16) is fixed by its middle part the drive shaft 11, capable to rotate, on which opposite ends, bulged out of the base 7, are firmly located the balanced wheel-like or cone-like elements 1 with moving weights 2 on the radiant guides 3, and upon the shaft 11, between each element 1 and the base 7, are mounted per one wobble plate 22 with slide rack, to each one of them are connected the kinematic chains 18, 27, that approach the weights 2 to the axis Ao on the corresponding element 1, and when the shaft 11 of the weights 2 rotates, the weights, rotated together with the elements 1, move in tern along the equal for each element 1 closed convex orbit 4, which center is constantly displaced in constant direction relatively the axis of rotation Ao, and due to this, is created the double directed disbalance at the different ends of the shaft 11, and moreover, when the slide racks or wobble plates 22 move along the shaft 11, and when the angles and directions of slope of the wobble plates 22 are changed, on the shaft 11 is created the summed linear propulsion force, which direction is changeable in space.

The wobble plate. Chain with one weight.

On conventionally imovel base 7 (Fig.17) is fixed the drive shaft 11, capable to rotate, where in alignment to it and firmly is mounted the balanced wheel-like element 1, on which diametrical guide 3 is located the weight 2, produced with the possibility to move along this guide 3,and at least the middle part of the weight 2 is done as the rack 16, and the weight 2 is chained with the gear-wheel-sprocket 14 or gear-wheel 17, which is situated upon the shaft 11, in parallel to the shaft, with the possibility to rotate, in balance, and upon the shaft 11, between the base and the element, is located the known mechanism of the wobble plate 22, to which upper ring in perimeter, to the opposite edges is fixed in moving position, for example, by the ball hinges the driving chain 10, which is thrown over and tightened through the sprocket 17, or joins in moving position the gear-semiwheel 28, fixed upon the shaft 11 in parallel to the shaft, in balance, with the possibility of having the limited angle of rotation, chained with the gear-wheel 14, and moreover, the chaining of the wheel 14 with the rack 16 on the weight 2 is preferably done in such a way that in the position when the wobble plate 22 is perpendicular to the shaft 11, the center of gravity of the weight 2 coincides with the axis of rotation Ao of the element 1, or with the biggest slope of the wobble plate 22, the center of gravity of the weight 2 coincides with the axis of rotation Ao of the element 1, and when the shaft 11 of the element 1 rotates, the driving chain 10 or the semiwheel 28, in cycle moved by the wobble plate 22, rotate in reverse the gear-wheel-sprocket 17, or the gear-wheel 14, attaching to the weight 2 the reciprocating motion so that during the complete rotation of the element 1, the weight 2, rotated together with the element 1, and its center of gravity, move along the closed convex orbit 4, that passes through the axis Ao of the element 1 or around it, which center is constantly displaced in constant direction relatively the axis Ao of the element 1, and due to this, is created the directed disbalance that attaches to the element 1 the linear propulsion force, and when the angle and direction of slope of the wobble plate 22 relatively the shaft 11 are changed, are changed the value and direction of displacement of orbit 4 of the weight 2 as well.

The wobble plate. Chain with one weight. Separated weights.

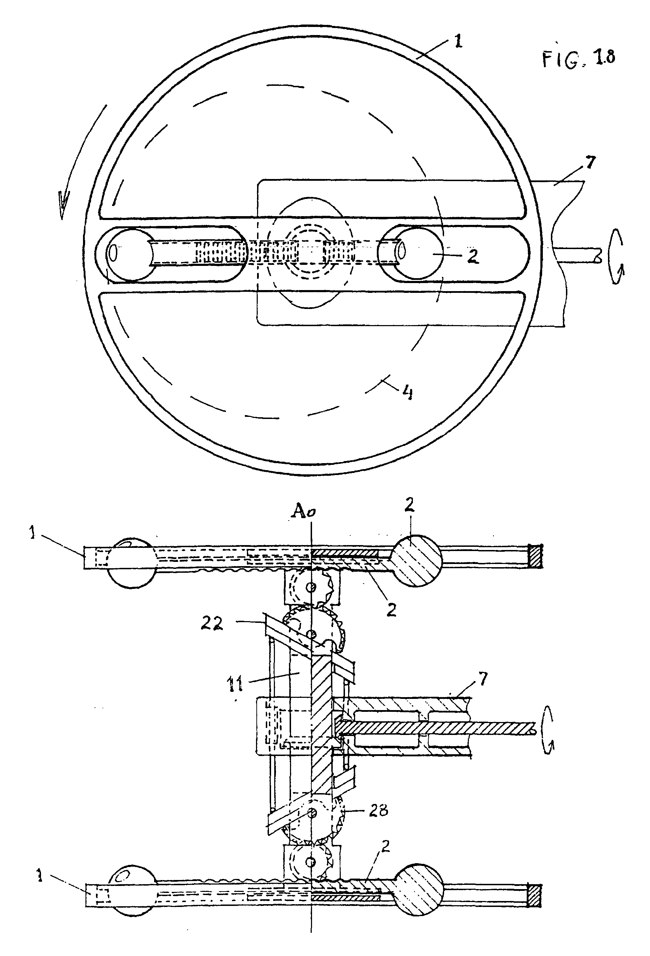

On conventionally imovel base 7 (Fig.18) is fixed the drive shaft 11, capable to rotate, on which opposite ends, bulged out of the base 7, in alignment to the shaft 11 and firmly are mounted two balanced wheel-like elements 1, where on diametrical guides 3 of each one are located the weights 2, produced each one with the possibility to move along this guide, and the middle part of each weight 2 is done as the rack 16, and each weight 2 is chained with the gear-wheel-sprocket 17 or gear-wheel 14, which is situated on each element upon the shaft 11, in parallel to the shaft 11, in balance, and upon the shaft 11, between the base 7 and the elements 11 are located two independent mechanisms of the wobble plate 22, per one for each element 1, to which upper rings in perimeter, to the opposite edges equally are fixed in moving position the driving chains 10, which are thrown over and tightened through the sprockets *17*, or join in moving position the gear-semiwheels 28, fixed upon the shaft 11 in balance, with the possibility of having the limited angle of rotation, chained with the gear-wheels 14, and moreover, the chaining of the wheels 14 with the racks 16 on the weights 2 is preferably done in a such way that in the position when the wobble plates 22 are perpendicular to the shaft, the centers of gravity of the weights 2 coincide with the axis of rotation Ao of the elements 1, or with the biggest slope of the wobble plate 22, the centers of gravity of the weights 2 coincide with the axis of rotation Ao of the elements, and, when the shaft 11 of the elements rotates, the driving chains 10 or semiwheels 28, in cycle moved by the wobble plates 22, rotate in reverse the gear-wheels-sprockets 17 or the gear-wheels 14, which applies to the weights 2 the reciprocating motion so that during the complete rotation of the elements 1, the weights 2, rotated together with the elements 1, or their centers of gravity, move on each element 1 along closed convex orbits 4, that pass through the axis Ao of the elements 1 or around it. which centers are constantly displaced in constant direction relatively the axis Ao of the elements 1, and due to this, is created the double directed disbalance at different ends of the shaft 11, and moreover, when the angles and directions of slope of the wobble plates 22 are changed, on the shaft 11 is created the summed linear propulsion force, which direction is changeable in space.

The wobble plate. Two weights on a screw shaft.

On conventionally imovel base 7 (Fig.19) is fixed the drive shaft 11, capable to rotate, where in alignment to it and firmly is situated the balanced wheel-like element 1, on which opposite radiant guides 3 are located per one equal weight 2, produced with the possibility to move along the guide 3, and also on the element I in parallel to the radiant guides 3 is mounted the balanced diametrical screw shaft 27 , fixed upon the element 1 with the possibility to rotate around its axis. in the middle of which, in alignment to it and firmly is located the sprocket 17 or the gear-wheel 14, and each weight 2 is chained to this screw shaft 27, and also upon the drive shaft 11, between the base 7 and the element 1, is situated the known mechanism of the wobble plate 22, to which upper ring, to the opposite edges is fixed in moving position the driving chain 10, which is thrown over and tightened through the sprocket 17 on the screw shaft 27, or to the upper ring of the wobble plate 22 joins in moving position the gear-semiwheel 28, mounted upon the drive shaft 11, longitudinally to it, with the possibility of having the limited angle of rotation, chained with the gear-wheel 14, on the screw shaft 27, and moreover, the chaining of the weights 2 with the screw shaft 27 and (or) the chain 10 with the sprocket 17, or the semiwheel 28 with the gear-wheel 14, preferably done in a such way that in the position when the wobble plate 22 is perpendicular to the drive shaft 11, the weights 2 are kept in the middle of the guides 3, at the equal distance from the axis of rotation Ao of the element I, and with the biggest slope of the wobble plate 22, the weights 2 are kept in the middle of the guides *3, at* the equal distance from the axis of rotation Ao of the element 1, and when the drive shaft 11 of the element 1 rotates, the driving chain 10 or the gear-semiwheel 28, in cycle moved by the wobble plate 22, rotates in reverse the screw shaft 27, which by the reciprocating motion move the weights 2 along the guides 3 in a such way that during the complete rotation of these element 1, the weights 2, rotated together with the element I, move along the closed orbits 4, which centers are constantly displaced in constant direction relatively the axis of rotation Ao of the element 1, and by this, creating the directed disbalance that attaches to the element 1 the linear propulsion force, and moreover, in case of the second preferable chaining of the weights 2 with the screw shaft 27 and (or) the chain 10 with the sprocket 17, or the semiwheel 28 with the gear-wheel 14, the weights 2 rotate along the different orbits 4, and when the direction and angle of slope of the wobble plate 22 are changed, are changed the direction and the value of displacement of orbits 4 of the weights 2.

The wobble plate. Two weights on the screw shaft. Separated weights.

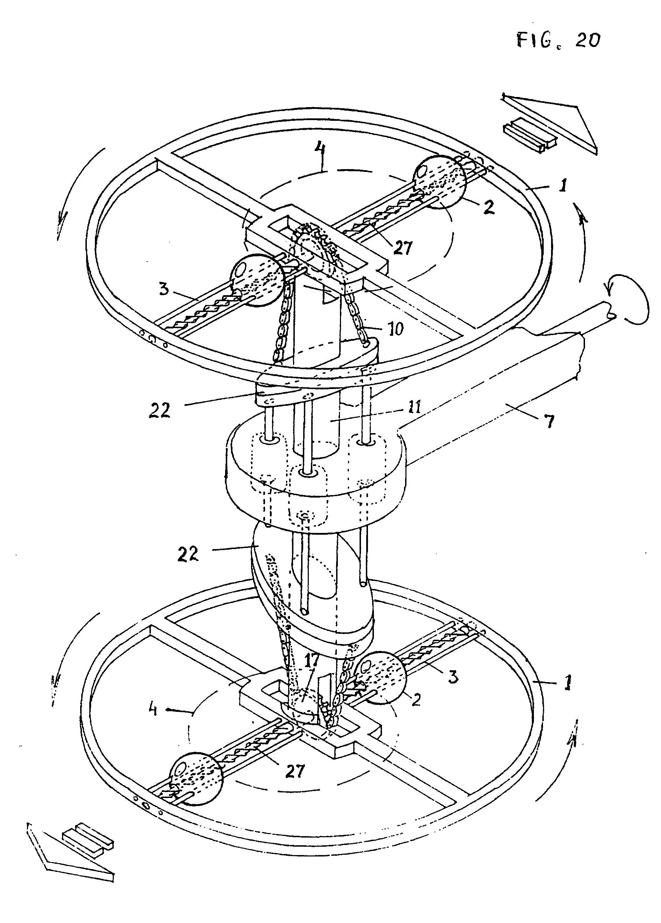

On conventionally imovel base 7 (Fig.20) is fixed the drive shaft 11, capable to rotate, on which opposite ends, bulged from the base, in alignment to the shaft 11 and firmly are mounted two balanced wheel-like elements 1, where on two opposite radiant guides of each one of them, are situated per identical for each element weight 2, produced with the possibility to move along this guide 3, and also upon each element 1 in parallel to the radiant guides 3, is located the balanced diametrical screw shaft 27, mounted upon the element 1 with the possibility to rotate around its axis, in the middle of which, in alignment to it and firmly is fixed the sprocket 17 or the gear-wheel 14, and each weight 2 on the element 1 is chained to this screw shaft 27, and upon the drive shaft 11, between the base 7 and each element 1 are situated two independent mechanisms of the wobble plates 22, per one for each of the elements, to the upper ring of each one, to the opposite edges is connected in moving position the driving chain 10, which is thrown and tightened through the sprocket 17 on the screw shaft 27, or to the upper ring of the wobble plate 22 joins in moving position the gear-semiwheel 28, fixed on the drive wheel 11 longitudinally to it, with the possibility of having the limited angle of rotation, chained with the gear-wheel 14 on the screw shaft 27, and moreover, the chaining of the weights 2 with the screw shaft 27 and/or the chain 10 with the sprocket 17, or the semiwheel 28 with the gear-wheel 14, preferably is done so that in position when the wobble plate 22 is perpendicular to the drive shaft 11, the weights 2 are kept in the middle of the guides 3, at the equal distance from the axis of rotation Ao of the element 1, or when there is the biggest slope of the wobble plate 22. the weights 2 are kept in the middle of the guides, at equal distance from the axis of rotation Ao of the element, and when the drive shaft 11 rotates, the driving chains 10, or the gear-wheels 28,in cycle moved by the wobble plates 22, rotate in reverse the screw shafts 27 of the elements 1, that by the reciprocating motion move the weights 2 along the guides in a such way that during the complete rotation of the elements 1, the weights 2, rotated together with the elements 1, move on each element 1 along the closed orbits 4, which centers are constantly displaced in constant direction relatively the axis of rotation Ao, thus, creating the double directed disbalance at the different ends of the shaft 11, attaching to it the linear propulsion force, and moreover, in case of the second preferable chaining of the weights 2 with the screw shaft 27 or (and) the chain 10 with the sprocket 17, or the semiwheel 28 with the gear-wheel 14, the weights 2 of each element 1 rotate along the different orbits 4, and when the directions and angles of slope of the wobble plates 22 are changed, are changed the direction and the value of displacement of orbits 4 of the weights 2 and changed the direction of the propulsion force in space as well.

The wobble plate. With shears-like drive.

On conventionally imovel base 7 (Fig.21) is fixed the drive shaft 11, capable to rotate, where in alignment to it and firmly is located the balanced wheel-like or cone-like element 1, and upon the element are situated in perimeter at least two diametrically opposite equal hermetic and closed capacities 2, produced with the possibility of considerable changing of their volume, for example, with the assistance of the moving wall or walls, hermetically connected one to another by the channel 3, or connected by channels through the general collector, situated upon the element 1 in balance/filled without hollows by the low-pressured liquid of considerable density, and the moving walls of each capacity 2 are connected with the equal lever 16 or levers of the equal shears-like mechanical or hydraulical transmission, where the axis of each one is equally fixed upon the element 1, and the beginning chains of these mechanical or hydraulical transmissions are equally connected, for example, by the ball hinges on the upper ring of the wobble plate 22, located upon the shaft 11 of the element 1, between the element 1 and the base 7, in a such way that when the wheel-like element 1 rotates, the initial chains of the mechanical or hydraulical transmissions move in tern along the wobble plate 22, push the levers 16 of the shears-like transmissions, relaying the pressure to the walls of the capacities 2, in tern compressing and moving apart them, or permitting them to split apart under the action of special springs or under the pressure of the liquid, including its centrifugal pressure so that when one capacity 2 is compressed, the other is enlarged and vice-verse, and due to this, the liquid flows from the compressed capacity 2 into the enlarged one, and the mostly filled capacity 2 always is located in the constant relatively the axis of rotation of the element 1 sector, thus, creating the directed disbalance.

The wobble plate. With the hydraulic drive.

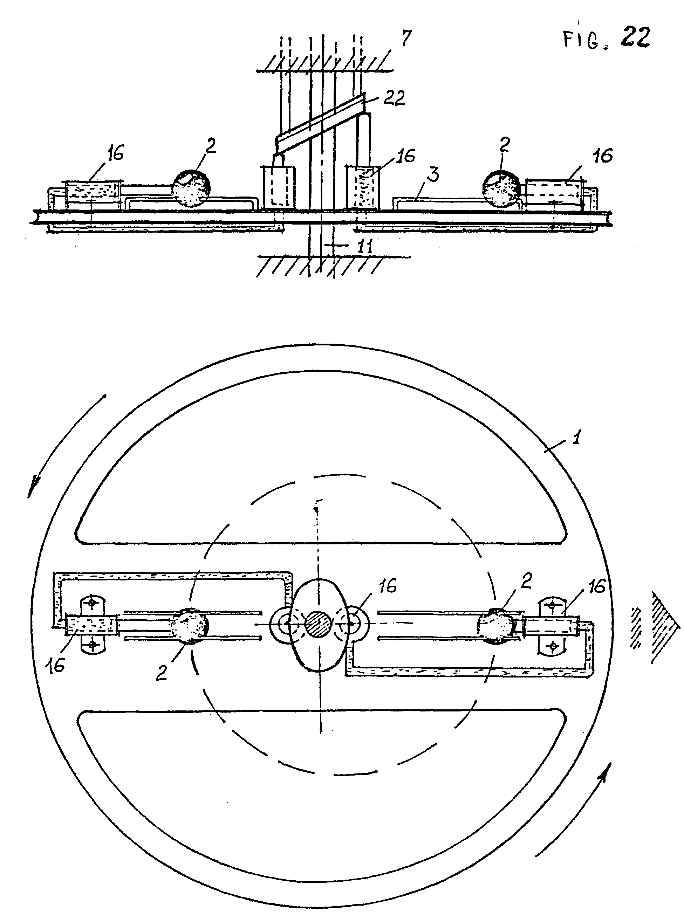

On conventionally imovel base 7 (Fig.22) is fixed the drive shaft 11, capable to rotate, where in alignment to it and firmly is mounted the balanced wheel-like or cone-like element 1, and upon the element are located in perimeter at least two equal diametrically opposite weights 2, produced with the possibility to move along the equal radiant guides 3, fixed upon the element 1, and each of these weights 2 is connected to the piston 16 of the hydraulic transmission, fixed on the element 1 at the external edge equally for each weight 2, and the second pistons 16 of these identical hydraulic transmissions are located upon the element 1 at the axis of rotation, along the shaft 11, and are connected to the upper ring of the wobble plate 22, situated on the shaft 11 of the element 1, between the element 1 and the base 7, and when the element 1 rotates around the axis, the second pistons 16 of the hydraulic transmissions move along the wobble plate 22, relay the effort to the pistons 16 of the weights 2 which in tern approach the weights 2 to the axis of rotation, and with the reverse motion of the pistons 16, the weights 2 are moved away from the axis under the influence of proper inertia, thus creating the directed disbalance, and moreover, the mass of the weights 2 is considerably superior than the mass of liquid in the hydraulic transmissions, and the pistons of the weights 2 have preferably equal or smaller diameter.

It is evident that the possibilities of industrial usage of the invention are considerably the vast ones and enable to make specially a new step in the development of transport machinery.

THE INDUSTRIAL IMPLEMENTATION OF THE INVENTION.

The sphere of the implementation of the invention is, as follows: in the terrestrial, aquatic, submerged, aerial, outerspace and universal mobile and transport apparatus as the propulsive device or counterinertial facility, as well as in the moving parts of the vehicles and mechanisms.

Owing to the invention, it becomes possible the creation of new in principle, independent from the external environment, propulsive devices for the mobile means, deprived of the shortcomings of the traditional propulsive devices and suitable for more practical implementation, due to the usage, in order to achieve the goals, of only the rotation of the body, without applying of the external additional forces.

The character and technical properties of the facilities enable to make use of them as the propulsive devices, or counterinertial facilities in different means of transportation, including in developing of the known machinery and creation of new types of the transport in masses with the early unknown properties.

THE IMPLEMENTATION OF THE FACILITIES.

The flying vehicle.

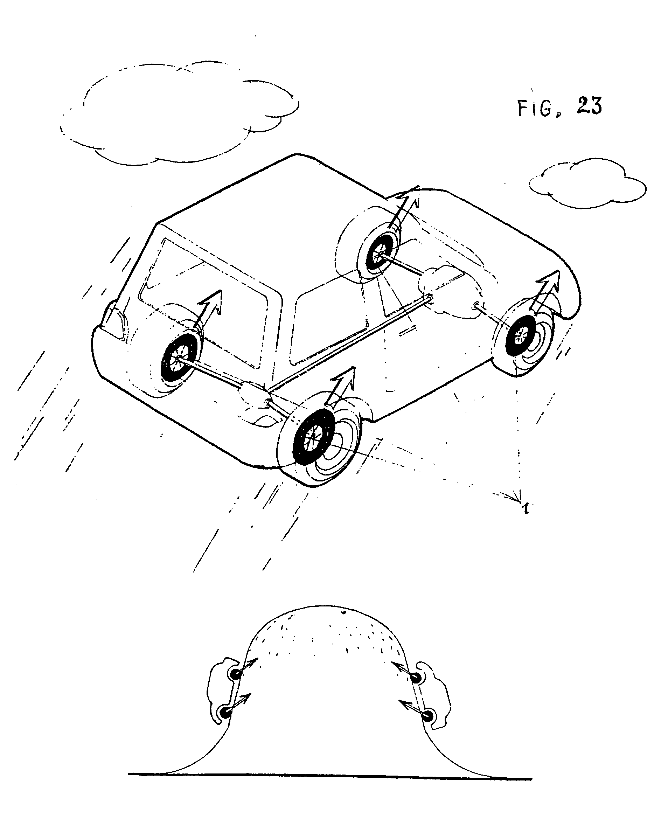

The all-wheel-drive vehicle (Fig.23) where in the sphere of each wheel, in parallel or under the angle to it, in mirror-like position at different ends of the axis, are fixed at least per one facility 1, equal on the axis, located with the possibility to rotate relatively the corresponding wheel, or upon the axis is mounted the facility 1, located with the possibility to rotate relatively the corresponding wheels, which clearance limits do not bulged out of the lower clearance limits of the wheels, and the angles of turning, at least some of them, are changed by steering controls equally and (or) in step with the turning angles of the steering wheels, or the turning angles are not changed by the steering controls, and the rotating moment from the engine or engines of the vehicle instead of the driving wheels, or simultaneously with the driving wheels is transmitted in step to all facilities 1, which while rotate, create the propulsion force, that moves the vehicle, or create the counterinertial force, that brakes the motion, in the needed direction, and by this, the parameters of the directed disbalance of the facilities 1, with which assistance is controlled the motion of the vehicle, are changed through the simple steering mechanisms of the vehicle, for example, by the brake pedal or the accelerator pedal, that relay as simple for each vehicle commands, as in combination with them, the commands to the facilities 1 through the special drives or servomotors, or parameters of the facilities 1 are changed by such simple mechanisms, or mechanism of steering of the vehicle of the double action, in combination with the additional steering mechanisms, special for the facilities I, for example, that change the direction of disbalance of the facilities I up and down, or that change the direction and (or) the value of the disbalance of independent facility 1, or of a part of the facilities 1, including the ones on one axis, and moreover, having the sufficient power of the engine or engines, as well as sufficient for this purpose parameters of the facilities 1, such a vehicle is capable to break the ground and move under control in the air.

The flying motorcycle.

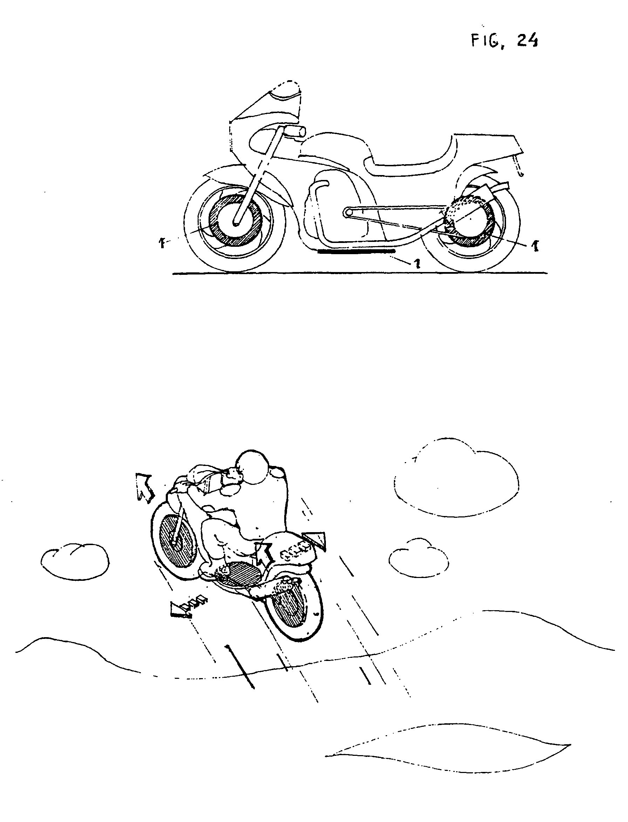

The motorcycle (Fig.24) where in the sphere of the engine as well as in the sphere of each wheel, in parallel to them, or under the angle to them, or at least in the sphere of each wheel, is fixed at least per one facility 1, located with the possibility to rotate relatively the corresponding wheel, which clearance limits do not bulged out of the lower clearance limits of the wheels, and the turning angle at least of the front facility 1 is changed equally, or in step with the turning angle of the steering wheel, or the turning angle of the facilities 1 is not changed by the steering controls, and in the sphere of the front wheel also there is the additional transmission of gear from the engine or engines, and the rotating moment from the engine or engines instead of the driving wheel, or simultaneously with the driving wheel is transmitted in step to all the facilities 1, which, while rotate, create the propulsion force that moves the motorcycle, or create the counter-inertial propulsion force, that brakes its motion, in the needed direction, and by this, the parameters of the directed disbalance of the facilities 1, with which assistance the motion of the motorcycle is controlled, are changed through the simple for motorcycle mechanisms of steering, for example, by the brake pedal or handle of accelerator, that relay as common for each motorcycle commands, as in coordination with them also the commands to the facilities 1, transmitted through the special drives or servomotors, or parameters are regulated by such simple mechanisms or mechanisms of steering of double action, in combination with the additional steering mechanisms, special for the facilities I, for example, the ones that change the direction of the disbalance of the facilities up and down, or that change separately the direction and, or the value of the disbalance of one facility, or of a part of the facilities 1, and moreover, having the sufficient power of the engine or engines, as well as sufficient for this purpose parameters of the facilities 1, such a motorcycle is capable of breaking the ground and moving under control in the air.

The vehicle with the facility at the bottom.

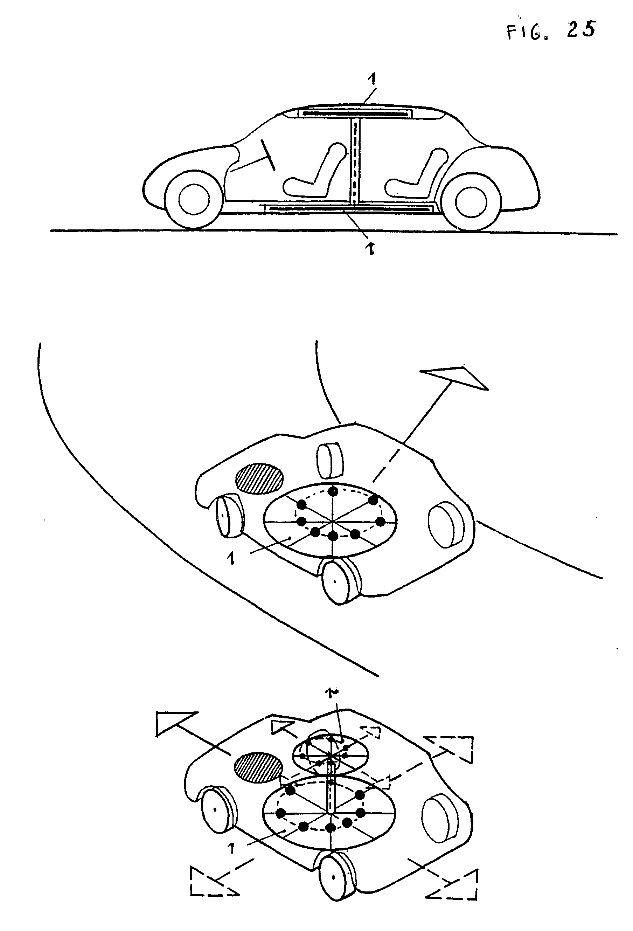

The vehicle (Fig.25) where as the main or additional propulsive device is used at least one facility 1, mounted in the sphere of the bottom, or where is used the facility 1, mounted in the center of the vehicle in a such way that the drive shaft is located vertically , and the elements are situated in the sphere of the bottom and top, and the rotating moment from the engine is transmitted instead of the wheels to the facility 1, or simultaneously with the driving wheels to the facility 1, which, when rotates, creates the propulsion force, that moves the vehicle, or that create the counter-inertial propulsion force, that brakes the motion, in the needed direction, and by this, the parameters of the directed disbalance of the facility 1, are changed through the simple steering mechanisms of the vehicle with the additional drives of the of the step action for the facilities, or the parameters of the facilities 1 are changed by the independent steering mechanisms for the facilities

The flying disc.

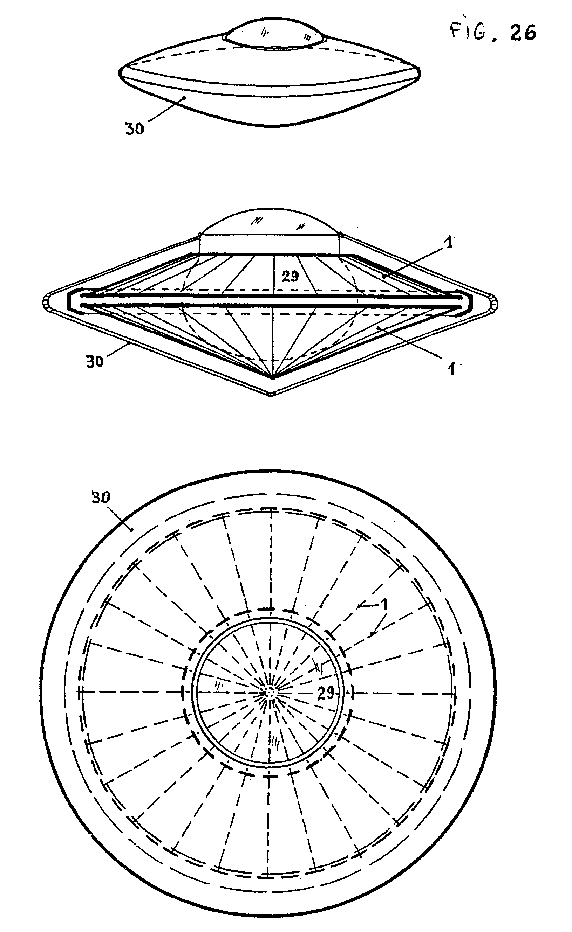

The aerial and outerspace apparatus of "flying disc" type (Fig.26) where as the propulsive device are used two facilities I, located in alignment, connected one to another with the possibility to rotate relatively each other, and that are rotate to the opposite sides, between which ones or in the central part of which are located the power plant 29 and the useful volume, and all these are enclosed into the streamlined hull 30, which shape and dimensions are determined by the shape and diminution of the propulsive device.

The flying reel.

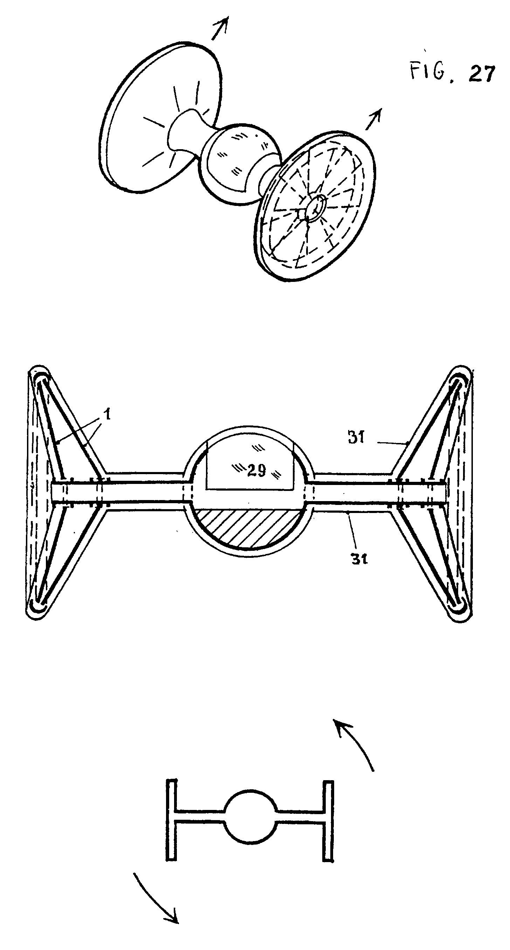

The aerial and outerspace apparatus of "flying reel" type (Fig.27) where as the propulsive device are used two facilities with separated elements, connected in alignment one inside another with the possibility of relative rotation, or here is used the facility 1 with the separated elements, connected in alignment with two equal and located mirror-like at its different sides facilities 1, produced with the possibility of relative rotation, and the facilities 1 are rotated relatively each other oppositely, in a such way that their counterrotation is neutralized, and around the facilities 1 there is a rigid construction 31, inside of which are located the power plant 29 and the useful volume, while the shape and dimensions of the construction 31 are determined by the shapes and dimensions of the propulsive device, as well as by the designation of a such apparatus.

**Claims**

**1.** The MODES. Several masses.
The Mode (Fig.1) to convert a solid body's rotation into the linear propulsion force, differs s by the following: upon the dynamically and (or) statically balanced relatively the axis of rotation body, which axis is protected against rotation or is produced with the possibility to rotate, are located uniformly or uniformly in equal groups around the axis of rotation the equal masses, produced with the possibility to move away by each mass or its center of gravity from the axis of rotation of the body and to approach towards this axis along the equal trajectories, and when the body rotates, the masses or their centers of gravity move away from the axis of rotation under the influence of the force of inertia, or the force of inertia in combination with the force, converted from the force of rotation of the body at the beginning of the trajectory of moving away, and then they are approached towards the axis under the influence of the force, converted from the force of rotation of the body, that rests upon the body or the axis at the equal for each mass point or group of points, in cycle during the complete rotation of the body around the axis in a such way that the masses, rotated together with the body, or their centers of gravity move in tern along the closed convex orbit around the axis, or that passes through the axis of rotation of the body, planed or unplaned, which center is displaced in constant relatively the axis of rotation of the body direction, resulting that the sum of vectors of centrifugal forces, used by masses for simultaneous action upon the body, as well as of vectors of forces of reaction of support, creates the directed disbalance, that attaches to the body the linear propulsion force across the axis of its rotation, and moreover, the value and shape of the orbit, as well as the value and direction of displacement of center of the orbit are changeable when the body rotates and (or) rests, and due to the mentioned, the value and direction of action of the linear propulsion force are changed.

**2.** Changeable masses.
The Mode (Fig.21) to convert a body's rotation into the linear propulsion force, differs by the following: upon the dynamically and (or) statically balanced relatively the axis of rotation body, which axis is protected against rotation or is produced with the possibility to rotate, are located uniformly or uniformly in equal groups around the axis of rotation the equal masses, which value is equally changeable, and when the body rotates, these masses are in tern increased until the biggest values in the constant, relatively the axis of rotation of the body, sector of the orbit, and then are reduced until the minor values in the dyametrically opposite sector of the orbit, and again are increased until the maximum values at the previous sector of the orbit. in cycle, during the complete rotation of the body around the axis, due to the flowing of the substance from one mass into another, or flowing of the substance from each mass into the general, balanced relatively the axis, collector, and back, under the influence of the force, applied to reduce each mass, converted from the force of rotation of the body, or from any other external force, that rests upon the body or the axis and equal for each mass points.

**3.** Along the axis by two systems of masses.
The Mode (Fig.6) to convert a solid body's rotation in to the linear propulsion force that, according to the point 1, differs by the following: upon the dynamically balanced relatively the axis of rotation body, which axis is protected against rotation or is produced with the possibility to rotate, are located uniformly or uniformly in equal groups around the axis of rotation, at least, two systems of the masses, equal, at least, in each system, which are uniformly situated around the axis of rotation in a such way that the mass of one system is uniformly alterated with the mass of another system, or these masses or centers of their gravity are produced with the possibility to be approached towards the axis and to be taken away from it along the equal in each system trajectories so that when the body rotates, the masses, rotated with the body, or their centers of gravity move along the equal in each system orbits, which centers are constantly displaced in constant direction relatively the axis of rotation of the body, and by this, the shape, dimensions and displacement of orbits of the masses, at least in one system, are changeable when the body rotates and (or) rests, and moreover, in case when the masses of all systems are equal one to another, the trajectories and orbits of motion of all masses or of their centers of gravity are identical and equally tilted towards the axis of rotation of the body, and the centers of the orbits of different systems are uniformly situated around the axis of rotation of the body, with equal displacements relatively it, thus, the linear propulsion force is created along the axis of rotation of the body.

**4.** Masses of different orbits.
The Mode (Fig.4) to convert a solid body's rotation in to the linear propulsion force that differs by the following: upon the balanced body is located the equal number of the identical moving masses of two systems, produced with the possibility to be approached and moved away, or approached and taken away of their centers of gravity from the axis of rotation of the body, located in a such way that the mass of one system is situated dyametrically opposite to the mass of another system, and when the body rotates, the masses of different systems, rotated together with the body, or their centers of gravity, are approached to the axis with the assistance of the force, converted from the force of rotation of the body or applied force, that rests upon the body at the equal for masses of one system points, and are taken away from the axis of rotation under the action of the force of inertia or forces of inertia, in combination with the force, converted from the force of rotation of the body at the beginning of the trajectory of taking away in a such way that during the complete rotation of the body they move along the equal for masses of each system orbits, different between systems, which centers are constantly displaced in one constant direction relatively the axis of rotation of the body, but at different distances from it, so that the distance from the axis of rotation of the body to the masses or centers of gravity of masses of one system, with smaller orbit, in case of their maximum distance from this axis, is equal to the distance from this axis of rotation to the masses or centers of gravity of the masses of the other system, with bigger orbits, in case of their minimum distance from the axis of rotation of the body.

**5.** Different masses.
The Mode (Fig.5) to convert a solid body's rotation into the linear propulsion force, differs by the following: upon the balanced body is located the even number of moving masses of two systems, equal in each system, but different between systems, produced with the possibility to approach and move away, or to approach and to move away their centers of gravity from the axis of the body, situated upon the body in a such way that the mass of one system is located dyametrically opposite to the mass of the other system, and when the body rotates, the masses, rotated together with the body. are approached to the axis of rotation of the body under the influence of the force, converted from the force of rotation of the body, that rests upon the body or the axis at the equal for masses of each system points, and the masses move away from the axis under the influence of the force of proper inertia so that the masses of different systems or their centers of gravity, during the complete rotation of the body, move along the equal in each system, but different between systems, orbits, which centers in both systems are constantly displaced in one, constant relatively the axis of rotation of the body, direction, so that the orbit of each bigger mass of one system is less than the orbit of each smaller mass of the other system, and the difference between values of centrifugal forces of masses of the different systems and forces of reaction of support, when the masses pass through the equal sector of the orbits, are equalized due to the difference between values of their orbits and (or) the difference in displacements of centers of their orbits relatively the axis of rotation of the body.

**6.** Two systems of separated masses.

The Mode (Fig.13) that, according to the points 1, or ,2,4,5, differs by the following: upon the body are located at least two systems of masses, which trajectories and orbits of motion or of motion of centers of gravity are situated at some distance from the masses of the other system along the axis of rotation of the body, and the centers of the orbits are constantly displaced in constant direction relatively this axis, and by this, the value of the orbits as well as the value and direction of displacements of the center of orbits of masses, at least, in one system of masses are changeable when the body rotates and (or) rests, and due to the mentioned, in different parts of the body is created the linear propulsion force, which summed direction is changeable in space, and the body is capable to move along the complicated space trajectory.

**7.** Connections between pair of masses.

The Mode (Fig. 9) that, according to the points 1, or 4,5, differs by the following: upon the body is located the even number of moving masses at least of one system and each two opposite masses of system are connected one to another in pair by equal connections, and by this, the forces to approach masses to the axis of rotation are applied to these connections or to the masses, and when the body rotates, the value of the force, needed to approach each mass to the axis of the body, is reduced due to the partial compensation of this force, or partial compensation that terns to be the complete compensation at the part of the trajectory, by the force of inertia of the opposite pair of masses, directed at the same or almost at the same side, transmitted through the connection.

**8.** One mass.

The Mode (Fig.17) to convert a solid body's rotation into the linear propulsion force, directed across the axis of rotation, differs by the following: upon the dynamically and, or statically balanced relatively the axis of rotation body, which axis is protected against rotation, or produced with the possibility to rotate, is located the mass, which is produced, or which center of gravity is produced with the possibility to be taken away from the axis of the body and be approached to the axis along the constant trajectory, and when the body rotates, the mass or its center of gravity is moved away from the axis under the action of the force of inertia, or force of inertia in combination with the force, converted from the force of rotation of the body, or with the other applied force, at the beginning of the trajectory of moving away, and then the mass or its center of gravity is approached to the axis under the action of the force, converted from the force of rotation of the body or any other applied force, that rests upon the body, or upon the axis, in cycle during the complete rotation of the body, or the mass, or its center of gravity is taken away, returned into the previous position, again taken away through the axis by the opposite side, and again returned in cycle during the complete rotation of the body, under the influence of the same forces, achieving its biggest displacement in constant relatively the axis of rotation of the body direction so that the mass, rotated together with the body, or its center of gravity moves along the closed convex orbit, planed or unplaned, that passes through the axis of the body, or around the axis of the body, which center is constantly displaced in constant direction relatively the axis of rotation of the body, resulting, that the sum of centrifugal forces at different points of the trajectory and of forces of reaction of support, relatively the approaching of the mass, creates the directed disbalance, that attaches to the body the propulsion force across the axis of rotation, and by this, the value and shape of orbit of center of the mass, as well as the value and direction of displacement of center of the orbit are changeable when the body rotates or rests, and due to this, is changed the value and direction of action of the linear propulsion force.

**9.** One mass and counterweight.

The Mode to convert a solid body's rotation, according to the point 8, that differ s by the following: the trajectory of motion of the moving mass upon the body passes around the axis of rotation and does not intercross the axis of rotation of the body, and upon the body is located in addition the counterweight, situated oppositely to the mass in a such way and of a such weight that it balances the mass at some point of its trajectory, preferably located in the middle of the trajectory, produced with the possibility to change the eccentricity, and due to the counterweight, when the body rotates, is narrowed the sector of action of the directed disbalance, and when the eccentricity of the counterweight changes, is changed the direction of such a sector as well.

**10.** One changeable mass.

The mode to convert a body's rotation, according to the points 8, or 9, that differs by the following: the value of the mass is changeable, for example, by the way of flowing of substance of the mass into the balanced, relatively the axis of the body, collector and back, and when the body rotates, the mass is reduced until the minor value in the constant, relatively the axis of rotation, sector of the orbit under the action of the force, converted from the force of rotation of the body, that rests upon the body, and then, is increased until the biggest value due to the flowing of substance under the action of the force of inertia in the dyametrically opposite sector of the orbit, and again is reduced until the minimum value at the previous sector of the orbit under the influence of the force, converted from the force of rotation of the body, in cycle, during the complete rotation of the body around the axis.

**11.** Two separated masses.
The Mode (Fig. 19), according to the points 8, or 9,10, that differs by the following: upon the body are located two separate masses, which trajectories and orbits of motion, or of motion of their centers of gravity are located at some distance one from another along the axis of rotation of the body, and centers of the orbits are constantly displaced in constant for each mass direction, relatively this axis, and by this, the value of the orbit, as well as the value and direction of displacement of center of the orbit at least of one mass are changeable, when the body rotates and (or) rests, and due to this, in different parts of the body is created the propulsion force, which summed direction is changeable in space, and the body is capable to move along the complicated space trajectory.

**12.** Along the axis by two masses.
The Mode, according to the point 8, that differs by the following: upon the body are located at least two masses which are uniformly situated around the axis of rotation, and these masses or their centers of gravity are produced with the possibility to be approached towards the axis and be taken away in a such way that, when the body rotates, the masses, rotated together with the body, or their centers of gravity move each one along its orbit, which and the centers of which are constantly displaced in constant direction, relatively the axis of rotation of the body, and by this, the shape and dimensions of the orbit, as well as the value and direction of displacement of center of the orbit at least of one mass are changeable when the body rotates and (or) rests, and moreover, in case when the masses are equal, the trajectories and orbits of motion of the masses, or of their centers of gravity are equal one to another and equally tilted towards the axis of rotation of the body. the centers of the orbits are identically displaced relatively the axis and situated uniformly around it, and the masses move in step and symmetrically relatively the axis, thus, the summed propulsion force is created along the axis of rotation of the body.

**13.** THE FACILITIES.
The eccentrical axis-crank.
The facility (Fig.7) to convert the rotation, according to the point I, that differs s by the following: on conventionally imovel base is located the axis-support, produced with the possibility to rotate relatively this base, and upon the axis-support is situated with the possibility to rotate, relatively it, the balanced wheel-like or cone-like element, on which equal radiant guides, mounted uniformly around the axis-support, are located the equal weights, per one on each guide, produced with the possibility to move along these guides, and upon the axis-support is also situated, in parallel to it, eccentrical and imovel axis-crank, the eccentricity of which is regulated, where is fixed the eccentrical mechanism, of group drive with the number of driving racks according to the number of the weights upon the element, and each one of them is firmly chained with the gear-wheel, located on the element in balance around the axis-support, at the beginning of each radiant guide, and this gear-wheel in alignment is chained in pair with the sprocket, over which is thrown the closed driving chain, thrown over and tightened also through the second sprocket, located upon the element in balance, at the end of each radiant guide, and to each chain equally is fixed the corresponding weight, or each gear-wheel enters or is connected with the other equal and equally balanced driving kinematic pair or chain, that moves the corresponding weight along the radiant guide, and when the element rotates around the axis-support, the racks of the group drive in tern and in reverse rotate the gear-wheels, that put into action the driving kinematic pairs or chains, approaching the weights to the axis of rotation, and then moving them away at the beginning of moving away and, or permitting them to move away from the axis of rotation under the action of forces of proper inertia, thus that during each rotation of the element around the axis-support, the weights , rotated together with element, move in tern around the axis of rotation along the closed convex orbit, which center is constantly displaced in constant direction relatively the axis of rotation of the element, creating the directed disbalance, and moreover, with changing of the value of the eccentricity of the axis-crank, changes the value of displacement of centers of orbits of the weights, and when the axis-support rotates relatively the base, is changed the direction of displacement of center of orbits and the direction of the disbalance.

**14.** The eccentrical axis-crank. Along the axis.
The facility (Fig.8) that, according to the points 2, or 13, differs by the following: the axis-support is imovel, and upon the cone-like element is located the even number of the, tilted towards the axis, guides with the weight on each of them, and the driving racks, being alterated, are connected with the driving kinematic pairs or chains oppositely the motion, thus permitting, when the element rotates, to create the double directed disbalance, which summed action is directed along the axis of rotation of the element.

**15.** The cam mechanism. Several weights.

The facility (Fig.9) to convert the rotation, that, according to the point 1, differs by the following: on conventionally imovel base is situated the axis-support, produced with the possibility to rotate relatively this base, and upon the axis-support is located with the possibility to rotate, relatively it, the balanced wheel-like or cone-like element, on which equal radiant guides, uniformly mounted around the axis-support, are located equal weights, per one on each guide, produced with the possibility to move along them, and upon the axis-support is situated the known cam mechanism with the imovel convex cam, equipped with the equal pushers or levers, according to the number of the weights, and each of them is firmly chained or connected with the corresponding equal gear-wheel, which is located upon the element uniformly and in balance at the beginning of each radiant guide, and this gear-wheel is in alignment chained with the sprocket, over which is thrown the closed driving chain, thrown over and tightened through the second sprocket, located upon the element in balance, at the end of each radiant guide, and to each chain equally is fixed the corresponding weight, or each gear-wheel is connected with the other equal and equally regulated driving kinematic pair or chain, that keeps moving the corresponding weight along the radiant guide, and when the element rotates around the axis-support, the pushers or levers in tern move on the cam, producing the reciprocating or reset-balancing motion, rotate in reverse the gears-wheels, which put into action the driving chains, approaching the weights to the axis of rotation, and then taking them away at the beginning of the moving away and/or permitting them to move away from the axis of rotation under the influence of the forces of proper inertia in a such way that during each rotation of the element around the axis-support, the weights, rotated together with the element, move in tern along the closed convex orbits, which center is constantly displaced in constant direction relatively the axis of rotation of the element, thus, creating the directed disbalance, and moreover, when the axis-support rotates relatively the base, is changed the direction of displacement of the orbit of the weights and of the directed disbalance.

**16.** The cam mechanism. Along the axis.

The facility (Fig.10) that, according to the points 3,or 15, differs by the following: the axis-support is imovel, and upon the cone-like element is located the even number of the tilted, towards the axis, guides with the weight on each of them, and the pushers or levers, being alterated, are connected with the driving kinematic pairs or chains oppositely to the motion, that permits, when the element rotates, to create the double directed disbalance, which summed action is directed along the axis of rotation of the element.

**17.** The wobble plate. Racks-gears.

The facility (Fig.11) to convert the rotation, according to the point 1, that differ s by the following: on conventionally imovel base is fixed with the possibility to rotate the drive shaft, upon which, in alignment to it, and firmly is located the balanced wheel-like or cone-like element, on which equal radiant guides, uniformly situated around the shaft, are located the equal weights, per one on each guide, produced with the possibility to move along these guides, and upon the shaft, between the base and the element is mounted the known mechanism of the wobble plate with the slide rack, to which upper ring, uniformly are fixed by the ball hinges, the equal racks, according to the number of the weights on the element, produced with the possibility to move along the shaft, and each of them is firmly chained with the equal gear-wheel, located upon the element in balance around the shaft, at the beginning of each radiant guide, and these gear-wheels are also firmly and equally chained with the other racks, identical one to another, and each of them is connected to the corresponding weight, and moreover, the chaining of each pair of such racks with the gear-wheel is done preferably in a such way that both racks are simultaneously chained with the wheel by their middle parts, and the gear-ratios inside of such rack transmissions are equal or different, or these gear-wheels enter or are connected with the other equal driving kinematic pairs or chains, which move the weights along the guides, and when the shaft rotates, the first racks move in tern along the wobble plate, rotate in reverse the gear-wheels, which by the reciprocating motion keep moving the second racks, or the other driving kinematic pairs or chains, approaching the weights to the axis of rotation of the element, and then baking them away from the axis of rotation at the beginning of moving away and/or permitting them to move away from the axis of rotation under the influence of the forces of proper inertia in a such way that during the complete rotation of the element, the weights, rotated together with the element, move in tern along the equal closed convex orbit, which center is constantly displaced in constant, relatively the axis of rotation, direction, thus creating the directed disbalance, that attaches to the element the linear propulsion force, and moreover, when the slide rack of the wobble plate moves along the shaft, the value of orbit of the weights is changed, and with changing of the angle and direction of slope of the wobble plate, are changed the value and direction of displacement of center of orbits of the weights.

**18.** The wobble plate. Racks-gears. Along the axis.

The facility (Fig.12) that, according to the points 3, or 17, differs by the following: upon the cone-like element is located the even number of equal radiant guides, tilted towards the axis of rotation, with the moving weight. on each of them, and the racks, fixed to the upper ring of the wobble plate, being alterated, are chained with the gear-wheels oppositely the motion, thus permitting, while the element rotates, to create the double directed disbalance. that attaches to the element the linear propulsion force, which summed action is directed along the axis of rotation of the element.

**19.** The wobble plate. Racks-gears. Along the axis. Two wobble plates.

The facility that, according to the point 18, differs by the following: upon the drive shaft are located two independent wobble plates, at different sides of the element, and the racks, fixed to the upper rings of each of them, are chained with the gear-wheels on the element in a such way that the rack of one wobble plate is alterated with the rack of the other wobble plate, thus creating the additional possibility to change the direction of the linear propulsion force.

**20.** The wobble plate. Racks-gears. Separated weights.

The facility (Fig.13) to convert the rotation that, according to the point 6, differ s by the following: on conventionally imovel base is fixed the drive shaft, capable to rotate, on which opposite ends, that are bulged out of the base, in alignment to the shaft, and firmly are located two balanced wheel-like or cone-like elements, on which radiant guides of each of them. situated uniformly around the shaft, are mounted equal for the element weights, per one on each guide, produced with the possibility to move along these guides, and upon the shaft, at some distance from each element along the axis, between the base and each element, are located two independent mechanisms of the wobble plates with slide racks, per one for each element, and to the upper rings of the wobble plates, uniformly by the ball hinges are fixed in moving position the equal racks, according to the number of the weights on each of the elements, produced with the possibility to move along this shaft, and each rack equally for the element and firmly is chained with the gear-wheel, situated on the corresponding element uniformly and in balance around the axis, at the beginning of each guide, and these gear-wheels of each element are also firmly and equally chained with the other racks, equal one to another, and each of them is fixed to the corresponding weight on the element, and moreover, the chaining of each pair of such racks with the gear-wheel is done preferably in a such way that both racks are simultaneously chained with the wheel by their middle parts, and the gear ratios inside of such rack transmissions are equal or different, or these gear-wheels enter or are connected with the other equal driving kinematic pairs or chains, which move the weights along the guides, and when the axis of the element rotates, the first racks of each element move in tern along the corresponding wobble plate, rotate in reverse the wheels, which by the reciprocating motion keep moving the second racks, or put into action the other driving kinematic pairs or chains, approaching the weights to the axis of rotation of the element, and then, moving them away from the axis of rotation at the beginning of moving away and, or permitting them to move away from the axis of rotation under the influence of the forces of proper inertia so that during the complete rotation of the elements, the weights, rotated together with the elements, move in tern along the equal for each element closed convex orbit, which center is constantly displaced in constant, relatively the axis of rotation, direction, thus, creating the double directed disbalance at the different ends of the shaft, and moreover, when the slide racks of the wobble plate move along the shaft, as well as when the angles and directions of slope of the wobble plates are changed , upon the shaft is created the summed linear propulsion force, which direction is changeable in space.

**21.** The wobble plate. Cams-screw shaft.

The facility (Fig.14) to convert the rotation that, according to the point 1, d i ffers by the following: on conventionally imovel base is fixed, with the possibility to rotate, the drive shaft. where in alignment to it and firmly is mounted the balanced wheel-like or cone-like element, on which equal radiant guides, uniformly located around the shaft, are situated the equal weights, one on each guide, produced with the possibility to move along these guides, and upon the shaft between the base and the element, is located the known mechanism of the wobble plate with the slide rack, or produced with the possibility to move along the shaft, to which upper ring in perimeter in moving position join the equal ball cams, or are connected the ball hinges, connected by their other ends to the levers with the possibility to balance the levers, and each of these levers is firmly put on one of the screw shafts, that are situated upon the element equally along each radiant guide, and produced with the possibility to rotate, and each weight is equally chained with the corresponding screw shaft, or these levers are connected with the other equal kinematic driving pairs or chains, that approach the weights to the axis along the guides, and when the shaft of the element rotates, the cams, or the hinges move in tern along the wobble plate, balance the levers and in reverse rotate the screw shafts, or put into action the other driving kinematic pairs or chains, approaching the weights to the axis of rotation of the element, and then permitting the weights to move away from the axis of rotation under the influence of the forces of inertia, or moving them away at the beginning of the trajectory of moving away so that during the complete rotation of the element, the weights, rotated together with the element, move in tern along the equal closed convex orbit, which center is constantly displaced in constant direction, relatively the axis of rotation, and due to this, is created the directed disbalance, that attaches to the element the linear propulsion force, and moreover, when the slide rack of the wobble plate or the wobble plate moves along the shaft, is changed the value of orbit of the weights, and with changing of the angle of slope of the wobble plate, changes the value of displacement of the center of the orbit, and with changing of the direction of slope of the wobble plate, changes the direction of displacement of center of orbits of the weights as well.

**22.** The wobble plate. Cams-screw shaft. Along the axis.

The facility (Fig. 15) that, according to the points 3, or 21, differs by the following: upon the cone-like element is located the even number of equal radiant guides, tilted towards the axis of rotation, with the moving weight on each of them, and the screw shafts, being alterated, are produced with the opposite thread in a such way that with the equal position of the cams, or hinges on the wobble plate, the screw shafts move and keep moving the weights along the guides oppositely the motion. thus permitting when the element rotates, to create the double directed disbalance, that attaches to the element the linear propulsion force, which summed action is directed along the axis of rotation of the element.

**23.** The wobble plate. Cams-screw shaft. Separated weights.

The facility (Fig.16) to convert the rotation that, according to the points 21, differs by the following: on conventionally imovel base is fixed by its middle part the drive shaft, capable to rotate, on which opposite ends, bulged out of the base, are firmly located the balanced wheel-like or cone-like elements with the moving weights on the radiant guides, and upon the shaft, between each element and the base, are mounted per one wobble plate with slide rack, and to each of them are joined the kinematic chains, that approach the weights to the axis on the corresponding element, and, when the shaft rotates, the weights, rotated together with the elements, move in tern along the equal for each element closed convex orbit, which center is constantly displaced in constant direction relatively the axis of rotation, and due to this, is created the double directed disbalance at the different ends of the shaft, and moreover, with the moving of the slide racks of the wobble plates along the shaft, as well as with changing of the angles and directions of slope of the wobble plates on the shaft, is created the summed linear propulsion force, which direction is changeable in space.

**24.** The wobble plate. Chain with one weight.

The facility (Fig.17) to convert the rotation that, according to the point 8, differ r s by the following: on conventionally imovel base is fixed the drive shaft, capable to rotate, where in alignment to it, and firmly is mounted the balanced wheel-like element, on diametrical guide of which is located the weight, produced with the possibility to move along this guide, and, at least, the middle part of the weight is done as the rack, and the weight is chained with the gear-wheel-sprocket or the gear-wheel, which is situated upon the shaft, in parallel to the shaft, in balance and with the possibility to rotate, and upon the shaft, between the base and the element is located the known mechanism of the wobble plate, to which upper ring in perimeter, to the opposite edges is fixed in moving position, for example, by the ball hinges, the driving chain, which is thrown over and tightened through the sprocket, or joins in moving position the gear-wheel, fixed on the shaft, in parallel to the shaft, with the possibility of having the limited angle of rotation, balanced and chained with the gear-wheel, and moreover, the chaining of the gear-wheel with the rack on the weight is preferably done in a such way that when in position when the wobble plate is perpendicular to the shaft, the center of gravity of the weight coincides with the axis of rotation of the element, or when there-is the biggest slope of the wobble plate, the center of gravity of the weight coincides with the axis of rotation of the element, and when the shaft of the element rotates, the driving chain or the gear-semiwheel, in cycle moved by the wobble plate, rotate in reverse the gear-wheel-sprocket or the gear-wheel, which applies to the weight the reciprocating motion so that during the complete rotation of the element, the weight, rotated together with the element, moves along closed convex orbit, that passes through the axis of the element or around it, which center is constantly displaced in constant direction relatively the axis of the element, and due to this, is created the directed disbalance, and when the angle and direction of slope of the wobble plate are changed, as well are changed the value and direction of displacement of the orbit of the weight.

**25.** The wobble plate. Chain with one weight. Separated weights.

The facility (Fig.18) to convert the rotation that, according to the points 24, differs by the following: on conventionally imovel base is fixed the drive shaft, capable to rotate, where on the opposite ends, bulged out of the base, in alignment to the shaft and firmly are mounted two balanced wheel-like elements, on which diametrical guides are located the weights, each one produced with the possibility to move along the guide, and the middle part of each weight is produced as a rack, and each weight is chained with the gear-wheel-sprocket or the gear-wheel, which is located at the each element upon the shaft, in parallel to the shaft, with the possibility to rotate, in balance, and upon the shaft, between the base and the elements, are situated two independent mechanisms of the wobble plate, one for each element, to which upper rings, to the opposite edges in moving position are fixed the driving chains, which are thrown and tightened through the sprockets, or join in moving position the gear-wheels, fixed on the shaft in balance, with the possibility of having the limited angle of rotation, chained with the gear-wheels, and moreover, the chaining of the wheels with the racks on the weights preferably is done in a such way that in position when the wobble plates are perpendicular to the shaft, the centers of gravity of the weights coincide with the axis of rotation of the elements, or when there- is the biggest slope of the wobble plate, the centers of gravity of the weights coincide with the axis of rotation of the elements, and when the shaft of the elements rotates, the driving chains or semiwheels, in cycle moved by the wobble plates, rotate in reverse the gear-wheels-sprockets or the gear-wheels, which attaches to the weights the reciprocating motion so that during the complete rotation of the elements, the weights, rotated together with the elements, and their centers of gravity, move on each element along closed convex orbits, that pass through the axis of the elements or around it, which centers are constantly displaced in constant direction relatively the axis of the elements, and due to this, is created the double directed disbalance at the different ends of the shaft, and moreover, when the angles and directions of slope of the wobble plates are changed, upon the shaft is created the summed linear propulsion force, which direction is changeable in space.

**26.** The wobble plate. Two weights on screw shaft.

The facility (Fig.19) to convert the rotation that, according to the points 1, or 4, differs by the following: on conventionally imovel base is fixed the drive shaft, capable to rotate, where in alignment to it and firmly is located the balanced wheel-like element, on which opposite radiant guides are fixed per one equal weight produced with the possibility to move along the guide, and also upon the element in parallel to the radiant guides is located the balanced diametrical screw shaft, fixed upon the element with the possibility to rotate around its axis, in the middle of which, in alignment to it and firmly is situated the sprocket or the gear-wheel, and each weight is fixed to this screw shaft, and also upon the drive shaft, between the base and the element, is mounted the known mechanism of the wobble plate, to which upper ring, to the opposite edges is fixed in moving position the driving chain, which is thrown over and tightened through the sprocket on the screw drive, or to the upper ring of the wobble plate joins in moving position the gear-semiwheel, fixed on the drive shaft, longitudinally to it, with the possibility of having the limited angle of rotation, chained with the gear-wheel, on the screw shaft, and moreover, the chaining of the weights with the screw shaft, chain with the sprocket, or the semiwheel with the gear-wheel, preferably, is done in a such way that in position when the wobble plate is perpendicular to the drive shaft, the weights are kept in the middle of the guides, at the equal distance from the axis of rotation of the element, or when there is the biggest slope of the wobble plate or the one of the edges of the semiwheel from the element, the weights are kept in the middle of the guides, at equal distance from the axis of rotation of the element, and when the drive shaft of the element rotates, the driving chain or the gear-semiwheel, in cycle moved by the wobble plate, rotate in reverse the screw shaft, that by the reciprocating motion makes the weights to move along the guides so that during the complete rotation of the element, the weights, rotated together with the element, move along the closed orbits, which centers are constantly displaced in constant direction relatively the axis of rotation of the element, thus creating the directed disbalance, that attaches to the element the linear propulsion force. and moreover, in case of the second preferable chaining of the weights with the screw shaft, chain with the sprocket, or the semiwheel with the gear-wheel, the weights are rotated along different orbits, and when the direction and the angle of slope of the wobble plate are changed, as well are changed the direction and the value of displacement of the orbits of the weights.

**27.** The wobble plate. Two weights on the screw shaft. Separated weights.

The facility (Fig.20) to convert the rotation that, according to the points 26, differs by the following: on conventionally imovel base is fixed the drive shaft, capable to rotate, where on the opposite ends, bulged out of the base, in alignment to the shaft, and firmly are located two balanced wheel-like elements, and where on two opposite radiant guides each of them are situated per one, equal for each element, weight, produced with the possibility to move along this guide, and also upon each element in parallel to the radiant guides, is mounted the balanced diametrical screw shaft, fixed upon the element with the possibility to rotate around its axis, in the middle of which, in alignment to it and firmly is fixed the sprocket or the gear-wheel, and each weight on the element is chained to this screw shaft, and upon the drive shaft, between the base and each element, are mounted two independent mechanisms of the wobble plate, one for each element, where to the upper ring of each of them, to the opposite edges is fixed in moving position the driving chain, which is thrown over and tightened through the sprocket on the screw shaft, or to the upper ring of the wobble plate joins in moving position the gear-semi-wheel, fixed upon the drive shaft, longitudinally to it, with the possibility of having the limited angle of rotation, chained with the gear-wheel on the screw shaft, and moreover, the chaining of the weights with the screw shaft and (or) chain with the sprocket, or the semiwheel with the gear-wheel, preferably is done in a such way that in position, when the wobble plate is perpendicular to the drive shaft, the weights are kept in the middle of the guides, at equal distance from the axis of rotation of the element, or when there is the biggest slope of the wobble plate, the weights are kept in the middle of the guides, at equal distance from the axis of rotation of the element, and when the drive shaft rotates, the driving chains, or the gear-semiwheels, in cycle moved by the wobble plates, rotate in reverse the screw shafts of the elements, which by the reciprocating motion make the weights to move along the guides so that during the complete rotation of the elements, the weights, rotated together with the elements, move on each element along the closed orbits, which centers are constantly displaced in constant direction relatively the axis of rotation of the elements, thus creating the double directed disbalance at different ends of the shaft, that attaches to it the linear propulsion force, and moreover, in case of the second preferable chaining of the weights with the screw shaft or (and) the chain with the sprocket, or the semiwheel with the gear-wheel, the weights of each element rotate along different orbits, and when the directions and the angles of slope of the wobble plates are changed, as well are changed the direction and the value of displacement of the orbits of the weights, and changed in space the direction of the propulsion force.

**28.** The wobble plate with the shears-like drive.

The facility (Fig.21) that, according to the point 2, differs by the following: on conventionally imovel base is fixed the drive shaft, capable to rotate, where in alignment to it and firmly is located the balanced wheel-like or cone-like element, and upon the element are situated in perimeter at least two dyametrically opposite equal, hermetic, closed capacities, produced with the possibility to change considerably their volume, for example, with the assistance of the moving wall or walls, hermetically connected one to another by the channel, or connected by the channels through the general collector, situated upon the element in balance, filled without hollows by low compressed liquid of the considerable density, and the moving walls of each capacity are connected with the equal lever or levers of the equal shears-like mechanical or hydraulical transmission, where the axis of each of them is equally fixed on the element, and the initial chains of these mechanical or hydraulical transmissions are equally fixed, for example, by the ball hinges on the upper ring of the wobble plate. located upon the shaft of the element, between the element and the base so that when the cone-like element rotates, the initial chains of the mechanical or hydraulical transmissions move in tern along the wobble plate, push the levers of the shears-like transmissions, relaying the pressure to the walls of the capacities, compressing them in tern and enlarging, or permitting them to enlarge under the action of special springs or under the pressure of the liquid including the centrifugal pressure so that when the one capacity is compressed, the other is enlarged, and vice-verse, and due to this, the liquid flows from the compressed capacity into the enlarged, and the mostly filled capacity always is located in constant, relatively the axis of rotation of the element, sector, creating the directed disbalance.

**29.** The wobble plate with the hydraulic drive.

The facility (Fig.22) that, according to the point I, differs by the following: on conventionally imovel base is fixed the drive shaft, capable to rotate, where in alignment to it and firmly is mounted the balanced wheel-like or cone-like element, and upon the element are situated in perimeter at least two equal, dyametrically opposite weights, produced with the possibility to move along the equal radiant guides, fixed upon the element, and each of these weights is connected to the piston of the hydraulic transmission, fixed upon the element at the external edge equally for each weight, and the second pistons of these equal hydraulic transmissions are located on the element near the axis of rotation, along the shaft and are connected to the upper ring of the wobble plate, situated upon the shaft of the element, between the element and the base, and when the element rotates around the axis, the second pistons of the hydraulic transmissions move along the wobble plate, relay the effort to the pistons of the weights, which in tern approach the weights to the axis of rotation, and in reverse motion of the pistons, the weights are taken away from the axis under the action of proper inertia, thus creating the directed disbalance, and moreover, the mass of the weights is considerably superior of the mass of liquid in the hydraulic transmissions, and the pistons of the weights are of preferably equal or less diameter.

**30.** THE USAGE OF THE FACILITIES.

The flying vehicle.

The all-wheel-drive vehicle (Fig.23) that differs by the following: in the sphere of each wheel, in parallel or under the angle to it, in mirror-like position at different ends of the axis, are fixed at least per one facility, produced according to the points I, or 2, 3, 4, 5, 6, 7, 8, 9, 10, 11, 12, including points 13, or 14, 15, 16, 17, 18, 19, 20, 21, 22, 23, 24, 25, 26, 27, 28, 29, equal on the axis, located with the possibility to rotate relatively the corresponding wheel, or upon the axis is mounted the facility, produced according to the points 6, 11, including points 20, 23, 25, 27, located with the possibility to rotate relatively the corresponding wheels, which clearance limits do not bulged out of the lower clearance limits of the wheels, and the turning angles at least of some of them are changed by steering controls equally and/or in step with the turning angles of the steering wheels, or the turning angles are not changed, and the rotating moment from the engine or engines of the vehicle instead of the driving wheels, or simultaneously with the driving wheels is transmitted in step to all facilities, which while rotate, create the propulsion force, that moves the vehicle, or create the counterinertial propulsion force, that brakes the motion, in the needed direction, and by this, the parameters of the directed disbalance of the facilities, with which assistance is controlled the motion of the vehicle, are changed by the simple steering mechanisms of the vehicle, for example, by the brake pedal or the accelerator pedal, that relay as simple for each vehicle commands, as in combination with them, the commands to the facilities through the special drives or servomotors, or parameters of the facilities are changed by such simple mechanisms of steering of the vehicle of the double action, in combination with the additional steering mechanisms, special for the facilities, for example, that change the direction of disbalance of all or some facilities up and down, or that change the direction and, or the value of the disbalance of independent facility, or of a part of the facilities, including the ones on one axis, and moreover, having the sufficient power of the engine, as well as sufficient for this purpose parameters of the facilities, such a vehicle is capable to break the ground and move under control in the air.

**31.** The flying motorcycle.
The motorcycle (Fig. 24) that differs by the following: in the sphere of the engine as well as in the sphere of each wheel, in parallel to them, or under the angle to them, or at least in the sphere of each wheel, are fixed at least per one facility, produced according to the points 1, or 2, 3, 4, 5, 6, 7, 8, 9, 10, 11, 12, including the points 13, or 14, 15, 16, 17, 18, 19, 20, 21, 22, 23, 24, 25, 26, 27, 28, 29, located with the possibility to rotate relatively the corresponding wheel, which clearance limits do not bulged out of the lower clearance limits of the wheels, and the turning angle at least of the front facility is changed equally, or in step with the turning angle of the steering wheel, or the turning angle of the facilities is not changed by the steering controls, and in the sphere of the front wheel also there is the additional transmission of gear from the engine, or engines, and the rotating moment from the engine or engines instead of the driving wheel, or simultaneously with the driving wheel, is transmitted in step to all the facilities, which, while rotate, create the propulsion force that moves the motorcycle, or create the counter-inertial propulsion force, that brakes its motion, in the needed direction, and by this, the parameters of the directed disbalance of the facilities, with which assistance the motion of the motorcycle is controlled, are changed through the simple for motorcycle mechanisms of steering, for example, by the brake pedal or handle of accelerator, that relay as common for each motorcycle commands, as in coordination with them also the commands to the facilities, transmitted through the special drives or servomotors, or parameters are regulated by such simple mechanisms or mechanism of steering of double action, in combination with the additional steering mechanisms, special for the facilities, for example, the ones that change the direction of the disbalance of the facilities up and down, or that change separately the direction and (or) the value of the disbalance of one facility, or of a part of the facilities, and moreover, having the sufficient power of the engine or engines, as well as sufficient for this purpose parameters of the facilities, such a motorcycle is capable of breaking the ground and moving under control in the air.

**32.** The vehicle with the facility at the bottom.
The vehicle (Fig.25) that differs by the following: here as the main or additional propulsive device is used at least one facility, produced according to the points 1, or 2, 3, 4, 5, 6, 7, 8, 9, 10, 11, 12, including the points 13, or 14, 15, 16, 17, 18, 19, 20, 21, 22, 23, 24, 25, 26, 27, 28, 29, mounted in the sphere of the bottom with the possibility to rotate, or where is used the facility, produced according to the points 6, 11, including the points 20, 23, 25, 27, mounted in the center of the vehicle in a such way that the drive shaft is located vertically, and the elements are situated in the sphere of the bottom and the top, and the rotating moment from the engine is transmitted instead of the wheels to the facility, or simultaneously with the driving wheels to the facility, which, when rotates, creates the propulsion force, that keeps the vehicle moving, or that create the counterinertial propulsion force, that brakes the motion, in the needed direction, and by this, the parameters of the directed disbalance of the facility are changed through the simple steering mechanisms of the vehicle with the additional drives of the step action for the facility, or independent mechanisms for the facility.

**33.** The flying disc.
The aerial and outerspace apparatus of "flying disc" type (Fig.26) that differs s by the following: here as the propulsive device are used two facilities, produced according to the points 1, or 2, 3, 4, 5, 6, 7, 8, 9, 10, 11, 12, including the points 13, or 14, 15, 16, 17, 18, 19, 20, 21, 22, 23, 24, 25, 26, 27, 28, 29, located in alignment, connected one to another with the possibility to rotate relatively each other, and that are rotate to the opposite sides, between which ones or in the central part of which are located the power plant and the useful volume, and ail these are enclosed into the streamlined hull, which shape and dimensions are determined by the shape and diminution of the propulsive device.

**34.** The flying reel.

The aerial and outerspace apparatus of "flying reel" type (Fig.27) that differs by the following: here as the propulsive device are used two facilities, produced according to the points 6, 11, including the points 20, 23, 25, 27, connected in alignment one inside another, or here is used such a facility, connected in alignment with two located mirror-like and in alignment at its different sides equal facilities, produced according to the points 1, or 2, 3, 4, 5, 6, 7, 8, 9, 10, 11, 12, including the points 13, or 14, 15, 16, 17, 18, 19, 20, 21, 22, 23, 24, 25, 26, 27, 28, 29, produced with the possibility of relative rotation, and the facilities are rotated relatively each other oppositely in a such way that their counterrotation is neutralized, and around the facilities there is a rigid construction, inside of which are located the power plant and the useful volume, where the shape and dimensions of the construction are determined by the shapes and dimensions of the propulsive device, as well as by the designation of a such apparatus.

FIG. 1

$I-I$ вар. 1

$I-I$ вар. 2

а)

б)

FIG. 2

FIG. 3

a)

δ)

FIG. 4

FIG. 5

FIG. 6

FIG. 7

FIG. 8

FIG. 9

FIG. 10

FIG. 11

FIG. 12

2

3

4

1

2

10

16

11

7

FIG. 13

FIG. 14

FIG. 15

FIG. 16

FiG. 17

FIG. 18

FIG. 19

(a)

(b)

FIG. 20

FIG. 21

FIG. 22

FIG. 23

FIG. 24

FIG. 25

FIG. 26

FIG. 27

# EP 1 213 477 A1

<table>
<tr><td colspan="2">INTERNATIONAL SEARCH REPORT</td><td>International application No.<br>PCT/RU 97/00163</td></tr>
</table>

**A. CLASSIFICATION OF SUBJECT MATTER**

IPC[6]: F03G 3/00, F03H 5/00, B60F 5/02, B60K 8/00, B62K 11/00, 17/00, B64C 39/00, B64G 1/40

According to International Patent Classification (IPC) or to both national classification and IPC

**B. FIELDS SEARCHED**

Minimum documentation searched (classification system followed by classification symbols)     IPC6:     B60F 5/00-5/02,
B60K 5/08, 7/00, 8/00, B62D 57/00, B62K 11/00, 17/00, B64C 39/00, 39/02, 39/06,
B64G 1/00, 1/40, F03G 3/00, 3/06, 3/08, F03H 5/00, F16H 37/12, 37/14

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | DE 4312188 A1 (JAGER LOTHAR) 20.10.94 | 1,2,3,15 |
| A | DE 4029799 A1 (JAGER LOTHAR) 26/03/92 | 2,3 |
| A | FR 2221968 A (GANGLOFF PAUL) 11.10.74 | 1,3,4,5,6,7,12,14,16, 18-19,22 |
| A | FR 2332438 A1 (MICHEL JEAN-PIERRE CONSTANT) 17.06.77 | 2,3,4,5,6,7,11,12,20, 23,25,27 |
| A | FR 2423653 A1 (LAURENT OLIVIER) 16.11.79 | 1,4,6,7,8-12,13 |
| A | GB 2078351 A (ROBERT LEATON COOK) 06 Jan 1982 | 2,3,8-12 |
| A | FR 2444172 A2 (CANOT ALBERT) 11.07.80 | 4,5-7,33,34 |
| A | DE 3737786 A1 (ENGEL WILHELM et al) 07.12.89 | 1,24,26 |

[X] Further documents are listed in the continuation of Box C.          [ ] See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 15 August 1997 (15.08.97) | (09.10.97) |

| Name and mailing address of the ISA/ <br> RU | Authorized officer |
|---|---|
| Facsimile No. | Telephone No. |

Form PCT/ISA/210 (second sheet) (July 1992)

**EP 1 213 477 A1**

## INTERNATIONAL SEARCH REPORT

International application No.

PCT/RU 97/00163

C (Continuation). DOCUMENTS CONSIDERED TO BE RELEVANT

| Category* | Citation of document, with indication, where appropriate, of the relevant passages | Relevant to claim No. |
|---|---|---|
| A | DE 3737786 A1 (ENGEL WILHELM) 07.12.89 | 1, 24, 26 |
| A | FR 2032876 A (VIRECOULON JEAN-JACQUES) 27.11.70 | 1, 5, 13 |
| A | SU 939817 A (KAZANSKY SELSKOKHOZYAISTVENNY INSTITUT), 30 June 1982 (30.06.82) | 1, 5, 6 |
| A | SU 1511498 A1 (I.M. DANILCHENKO), 30 September 1989 (30.09.89) | 2, 10, 28 |
| A | FR 2137205 A (BONNET JULIEN RENE) 29.12.72 | 1, 13, 15, 16, 32 |
| A | US 4070855 A (ROY F. LUND) 31.01.78 | 7, 14, 15, 17, 21, 22 |
| A | FR 2143511 A (LE MAUFF GILBERT) 09.02.73 | 8, 9, 10 |
| A | DE 3830928 A1 (MOSER KARL) 15.03.90 | 14, 16, 24 |
| A | US 4195483 A (WALLACE C. MYERS) 01.04.80 | 14, 28, 29 |
| A | FR 2170296 A (GANGLOFF PAUL) 14.09.73 | 10, 28 |
| A | GB 2111654 A ( AGOFURE ANTHONY ETANIYOHWO) 06.07.83 | 13, 15, 21, 28, 29 |
| A | GB 2289757 A (GYRON LIMITED) 29.11.95 | 14,16,20,23,27,34 |
| A | WO 95/28565 A1 (IZAGIRRE IRURE, JOSU) 26.10.95 | 14,16-19,21 |
| A | FR 2243609 A5 (JONES AKEX CHARLES) 04.04.75 | 12, 20 |
| A | FR 2519711 A1 (SIRIANO PAEZ JOSE MIGUEL) 18.07.83 | 13 |
| A | FR 2261429 A1 (H.N.C. ELECTRONICS LIMITED) 12.09.75 | 3-6, 11 |
| A | FR 2444171 A2 (CANOT ALBERT CHARLES CAMILLE) 11.07.80 | 3, 4, 33, 34 |
| A | FR 2264676 A1 (MINIER GERARD, JEAN) 17.10.75 | 14,18,19,32,33,34 |
| A | FR 2408736 A1 (RAKOTOARISOA GUY HERBERT) 08.06.79 | 23,30,31,32,33,34 |
| A | FR 2473835 A (GOZLAN CLAUDE) 17.07.81 | 24,25 |
| A | FR 2570441 A1 (STRYDOM MOSES) 21.03.86 | 26 |

Form PCT/ISA/210 (continuation of second sheet) (July 1992)

# INTERNATIONAL SEARCH REPORT

| International application No. |
| --- |
| PCT/RU 97/00163 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | GB 1479450 A (EDWIN JAMES CHISMAN RICKMAN) 13.07.77 | 13,15,21,24 |
| A | FR 2540570 A1 (CALZOLARI RINO) 10.08.84 | 24,26,29 |
| A | GB 1412146 A (DAVID OLORUNFEMI ENIOJUKAN) 29.10.75 | 30,31 |
| A | FR 2561593 A1 (BRUYANT GUY) 26.03.84 | 30,31 |
| A | FR 2036637 A (VEB SCHWERMASCHINENBAU NOBAS NORDHAUSEN) 24.12.70 | 30,31 |
| A | SU 522366 A (KURSKY POLITEKHNICHESKY INSTITUT), 10 August 1976 (10.08.76) | 1,30,31,32,33,34 |
| A | EP 0304614 A2 (von KOZIEROWSKI, JOACHIM) 01.03.89 | 30 |
| A | WO 92/00222 A1 (DEJOY, DOMINICK, Jr.) 09 January 1992 (09.01.92) | 30 |
| A | WO 96/00497 A3 (ARNTZ, FRIEDRICH, OTTOKAR) 11 January 1996 (11.01.96) | 30 |
| A | US 2966317 A (TIBERIU I. RAMNICEANU) 27 Dec. 1960 | 30 |
| A | SU 5888 A (V.B. VEINBERG), 31 July 1928 (31.07.28) | 31 |
| A | SU 589150 A (R.I. BUKIN-ROMANOV), 25 January 1978 (25.01.78) | 32 |
| A | FR 2435614 A (GOZLAN CLAUDE) 04.04.80 | 32 |
| A | JP 57104475 A (ROKUSHIYA YOSHIKATA) 29.06.82 | 32 |
| A | DE 3318244 A1 (HASSE, HEINZ F.) 09.02.84 | 33 |
| A | US 4778128 A (HERBERT H. WRIGHT et al.) 18 Ocn. 1988 | 33 |
| A | WO 85/03053 A1 (KOUHIA, NIILO) 18 July 1985 (18.07.85) | 33 |
| A | WO 88/06119 A1 (MORAIS, APARECIDO, COSTA) 25 August 1988 | 33 |
| A | US 4078748 A (SYNCHROSAT LIMITED) 14 Mar. 1978 | 34 |

Form PCT/ISA/210 (continuation of second sheet) (July 1992)